# EUROPEAN PATENT APPLICATION

(11) **EP 4 561 263 A2**
(43) Date of publication of application: **28.05.2025**
(21) Application number: 24215935.8
(22) Date of filing: 27.11.2024
(51) Int. Cl.: H05B 3/56, H05B 3/06

(54) **MODULAR CONNECTION SYSTEM AND METHOD**

(30) Priority: 27.11.2023 US 202363602940 P; 27.11.2023 US 202363602918 P
(71) Applicant: nVent Services GmbH, 8200 Schaffhausen (CH)
(72) Inventor: Jarvis, William E., Millbrae (US); Wang, Jimmy, Hillsborough (US)
(74) Representative: Barker Brettell LLP

(57) **Abstract**

A termination assembly for a heating cable includes a first assembly that connects to a first conductor of the heating cable and includes a first cam (192) rotatable about a first base frame (202) to contact the first conductor from a first side, and a second cam (192) rotatable about the first base frame to contact the first conductor from a second side. A second assembly connects to a second conductor of the heating cable and includes a third cam (192) rotatable about a second base frame (202) to contact the second conductor from the first side, and a fourth cam (192) rotatable about the second base frame to contact the second conductor from the second side. Each cam includes teeth (194) configured to pierce through a jacket and core material of the heating cable when the respective cam is rotated, and a first end portion adjacent to the teeth to contact the respective conductor.

## Description

### RELATED APPLICATIONS

This application claims priority under 35 U.S.C. § 119 to United States Provisional Patent Application No. 63/602,940 filed on November 27, 2023, and United States Provisional Patent Application No. 63/602,918 filed on November 27, 2023, the entire contents of which are incorporated herein by reference.

### BACKGROUND

Elongate cables such as power cables or heating cables often must be electrically connected to another elongate cable or to a source of electrical power, e.g., via an electrical plug. Connecting one such cable to a connector or plug can require tedious and craft-sensitive assembly, as well as special tools, in order to ensure that good electrical connection is achieved. For example, if such connections are made in the field, the cable may be cut to an appropriate length for the particular application, and multiple layers along the cut end are stripped away to expose the cable conductors. Stripping these layers can be difficult, may require special tools, and may not result in completely "clean" conductors, thus making good electrical connection to the plug difficult. In addition, the time required to strip the cable and assemble the plug can be relatively significant.

In some cable applications, to address these inefficiencies, insulation displacement connector (IDC) systems have been developed. For example, a fixture for an IDC may include a wire guide module having a channel for receiving the electrical cable. When the cable is inserted into the channel and the IDC module and the wire guide module are mated, the cable is forced against tines on the IDC so that the tines pierce the cable to make electrical contact with the conductors.

Current IDC systems, however, require different components for different connection types. Many systems are also only meant for factory-set terminations rather than for connections made in the field. Furthermore, many IDC systems are too bulky for under-insulation installations, for example, for applications that require insulation over the cables and the components on which the cables are installed. Therefore, there is a need for a more streamlined cable connection system that can be used in the field.

### SUMMARY

Some embodiments provide a termination assembly for a heating cable including a first conductor, a second conductor, a core material over the first conductor and the second conductor, and a jacket over the core material. The termination assembly includes a first assembly and a second assembly. The first assembly connects to the first conductor of the heating cable and includes a first base frame with a first channel that receives the heating cable. The first assembly also includes a first cam rotatable about the first base frame to contact the first conductor from a first side when the first cam is in a closed position, and a second cam rotatable about the first base frame to contact the first conductor from a second side when the second cam is in a closed position. The second assembly connects to the second conductor of the heating cable and includes a second base frame with a second channel that receives the heating cable. The second assembly also includes a third cam rotatable about the second base frame to contact the second conductor from the first side when the third cam is in a closed position, and a fourth cam rotatable about the second base frame to contact the second conductor from the second side when the fourth cam is in a closed position. Each of the first cam, the second cam, the third cam and the fourth cam includes teeth configured to pierce through the jacket and the core material when the respective cam is rotated, and a first end portion adjacent to the teeth to contact the respective conductor when the respective cam is in the closed position.

Some embodiments provide a method of terminating a heating cable via a termination assembly. The method includes aligning a first conductor of the heating cable with a first assembly and aligning a second conductor of the heating cable with a second assembly. Th method also includes rotating a first cam of the first assembly from an open position to a closed position to cause teeth of the first cam to pierce through a jacket and core material of the heating cable and allow a first end portion of the first cam adjacent to the teeth to contact the first conductor from a first side of the heating cable, and rotating a second cam of the first assembly from an open position to a closed position to cause teeth of the second cam to pierce through the jacket and the core material of the heating cable and allow a first end portion of the second cam adjacent to the teeth to contact the first conductor from a second side of the heating cable. The method further includes rotating a third cam of the second assembly from an open position to a closed position to cause teeth of the third cam to pierce through the jacket and the core material of the heating cable and allow a first end portion of the third cam adjacent to the teeth to contact the second conductor from the first side, and rotating a fourth cam of the second assembly from an open position to a closed position to cause teeth of the fourth cam to pierce through the jacket and the core material of the heating cable and allow a first end portion of the fourth cam adjacent to the teeth to contact the second conductor from the second side.

Some embodiments provide a termination assembly for a heating cable including a first conductor, a second conductor, a core material over the first conductor and the second conductor, and a jacket over the core material. The termination assembly includes a first assembly and a second assembly. The first assembly connects to the first conductor of the heating cable and includes a first base frame that includes a first channel that receives the heating cable, a first cam rotatable about the first base frame to contact the first conductor from a first side when the first cam is in a closed position, and a first contact member coupled to the first base frame to contact the first conductor from a second side when the first cam is in the closed position. The second assembly connects to the second conductor of the heating cable and includes a second base frame that includes a second channel that receives the heating cable, a second cam rotatable about the second base frame to contact the second conductor from the first side when the second cam is in a closed position, and a second contact member coupled to the second base frame to contact the second conductor from the second side when the second cam is in the closed position, Each of the first cam and the second cam includes teeth configured to pierce through the jacket and the core material when the respective cam is rotated, and a first end portion adjacent to the teeth to contact the respective conductor when the respective cam is in the closed position. Additionally, each of the first contact member and the second contact member includes an extension configured to pierce through the jacket and the core material when the respective cam is rotated, forcing the respective conductor onto the respective contact member.

Features which are described in the context of separate aspects and/or embodiments of the invention may be used together and/or be interchangeable wherever possible. Similarly, where features are, for brevity, described in the context of a single embodiment, those features may also be provided separately or in any suitable sub- combination. Features described in connection with the termination assembly may have corresponding features definable and/or combinable with respect to a method or vice versa, and these embodiments are specifically envisaged.

### DESCRIPTION OF THE DRAWINGS

FIG. 1 is an isometric cutaway view of a self-regulating heater cable.
FIG. 2 is an isometric view of a cable coupled to an end termination plug according to some embodiments.
FIG. 3 is an isometric view of a cable with an end termination plug and an end seal module, according to some embodiments, configured to be coupled to the end termination plug.
FIG. 4 is an isometric view of a base module, according to some embodiments, configured to be coupled to an end termination plug.
FIG. 5 is an isometric view of the base module of FIG. 4 to be coupled between two cables, forming a power connection or splice.
FIG. 6 is an isometric view of the base module of FIG. 4 to be coupled between three cables, forming a power tee or three-way splice.
FIG. 7 is an isometric view of the base module of FIG. 4 to be coupled between four cables, forming an X branch or X splice.
FIG. 8 is a side view of a heating cable coupled to a power cable via a base module, according to some embodiments.
FIG. 9 is a side view of heating cable, including an end termination plug, coupled to a power cable, including a power termination plug, according to some embodiments.
FIG. 10 is a side view of a heating cable, including an end termination plug, coupled to a power termination plug of a heat trace system component, according to some embodiments.
FIG. 11 is an isometric view of a cable with an end termination plug and a lighted end seal module, according to some embodiments, configured to be coupled to the end termination plug.
FIG. 12 is an isometric view of two cables with end termination plugs and an accessory module, according to some embodiments, configured to be coupled to the end termination plugs.
FIG. 13 is a schematic view of two cables with end termination plugs and an accessory module, according to some embodiments, configured to be coupled to the end termination plugs.
FIG. 14 is a cross-sectional view of an example blade configuration, according to some embodiments, for use in an end termination plug for connecting to conductors of a heating cable.
FIG. 15 is a partial isometric view of the blade configuration of FIG. 17 and a heating cable prior to insertion into the device.
FIG. 16 is an isometric view of the blade configuration of FIG. 17 and a heating cable prior to insertion into the device.
FIG. 17 is an isometric view of the blade configuration of FIG. 17 with a heating cable inserted therein.
FIG. 18 is an isometric view of an example spike configuration, according to some embodiments, for use in an end termination plug for connecting to conductors of a heating cable.
FIG. 19 is an isometric view of the spike configuration of FIG. 18 with a heating cable inserted therein.
FIG. 20 is a cross-sectional view of the spike configuration of FIG. 18 prior to making electrical connection with an inserted heating cable.
FIG. 21 is a cross-sectional view of the spike configuration of FIG. 18 after making electrical connection with an inserted heating cable.
FIG. 22 is a partial isometric view of a punch configuration, according to some embodiments, for use in an end termination plug for connecting to conductors of a heating cable.
FIG. 23 is a cross-sectional view of the punch configuration of FIG. 22.
FIG. 24 is an isometric view of the punch configuration of FIG. 22 with a heating cable inserted therein.
FIG. 25 is an isometric view of a cam configuration, according to some embodiments, for use in an end termination plug for connecting to conductors of a heating cable.
FIG. 26 is an isometric view of the cam configuration of FIG. 25 with a heating cable inserted therein.
FIG. 27 is a cross-sectional view of the cam configuration of FIG. 25, taken along line 27-27 in FIG. 26, prior to making electrical connection with an inserted heating cable.
FIG. 28 is a cross-sectional view of the cam configuration of FIG. 25 after making electrical connection with an inserted heating cable.
FIG. 29 is a cross-sectional view of the cam configuration of FIG. 25 taken along line 29-29 of FIG. 25.
FIG. 30 is an isometric view of a wide cam configuration, according to some embodiments, for use in an end termination plug for connecting to conductors of a heating cable.
FIG. 31 is a partial isometric view of the wide cam configuration of FIG. 30 with a heating cable inserted therein.
FIG. 32 is a cross-sectional view of the wide cam configuration of FIG. 30 taken along line 32-32 of FIG. 31.
FIG. 33 is an isometric view of a side cam configuration, according to some embodiments, for use in an end termination plug for connecting to conductors of a heating cable.
FIG. 34 is a partial isometric view of the side cam configuration of FIG. 33 with a heating cable inserted therein.
FIG. 35 is a cross-sectional view of the side cam configuration of FIG. 33 taken along line 35-35 of FIG. 33.
FIG. 36 is an isometric view of an angled cam configuration, according to some embodiments, for use in an end termination plug for connecting to conductors of a heating cable.
FIG. 37 is a partial isometric view of the angled cam configuration of FIG. 36.
FIG. 38 is a cross-sectional view of the angled cam configuration of FIG. 36 taken along line 38-38 of FIG. 37, including a cable.
FIG. 39 is an isometric view of a transverse cam configuration, according to some embodiments, for use in an end termination plug for connecting to conductors of a heating cable.
FIG. 40 is a partial isometric view of the transverse cam configuration of FIG. 39 with a heating cable inserted therein.
FIG. 41 is a cross-sectional view of the transverse cam configuration of FIG. 39 taken along line 41-41 of FIG. 39.
FIG. 42 is an isometric view of a split cam configuration, according to some embodiments, for use in an end termination plug for connecting to conductors of a heating cable.
FIG. 43 is a partial isometric view of the split cam configuration of FIG. 42.
FIG. 44 is an isometric view of a frame assembly of the split cam configuration of FIG. 42, including an angled saw tooth extension.
FIG. 45 is an isometric view of another frame assembly of the split cam configuration of FIG. 42, according to some embodiments, including a pins extension.
FIG. 46 is an isometric view of another frame assembly of the split cam configuration of FIG. 42, according to some embodiments, including a lateral saw tooth extension.
FIG. 47 is an isometric view of another frame assembly of the split cam configuration of FIG. 42, according to some embodiments, including an insulation displacement connector extension.
FIG. 48 is an isometric view of another frame assembly of the split cam configuration of FIG. 42, according to some embodiments, including a single saw tooth extension.
FIG. 49 is an isometric view of another frame assembly of the split cam configuration of FIG. 42, according to some embodiments, including a longitudinal saw tooth extension.

### DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

The following discussion is presented to enable a person skilled in the art to make and use embodiments of the invention. Various modifications to the illustrated embodiments will be readily apparent to those skilled in the art, and the generic principles herein can be applied to other embodiments and applications without departing from embodiments of the invention. Thus, embodiments of the invention are not intended to be limited to embodiments shown, but are to be accorded the widest scope consistent with the principles and features disclosed herein. The following detailed description is to be read with reference to the figures, in which like elements in different figures have like reference numerals. The figures, which are not necessarily to scale, depict selected embodiments and are not intended to limit the scope of embodiments of the invention. Skilled artisans will recognize the examples provided herein have many useful alternatives and fall within the scope of embodiments of the invention.

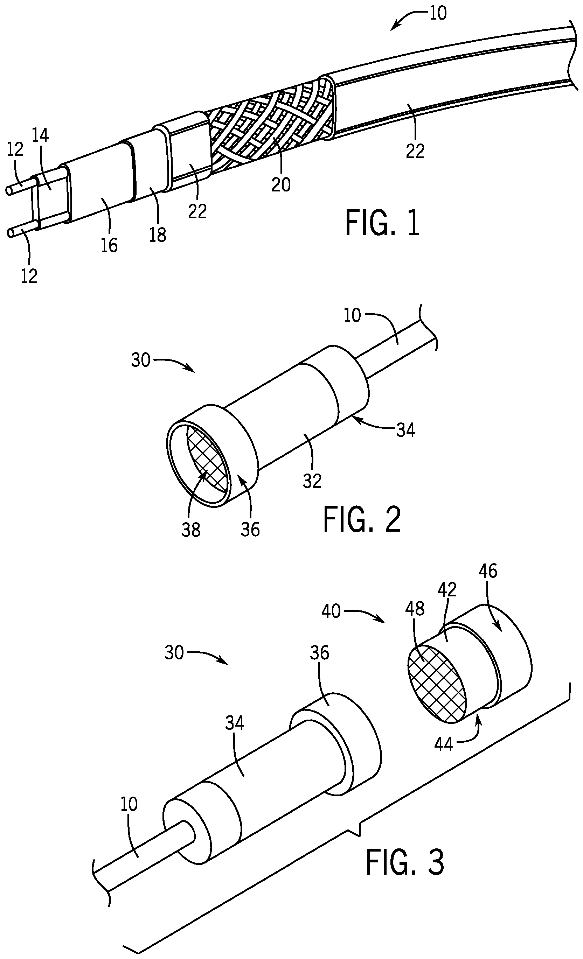

FIG. 1 illustrates an example self-regulating heating cable 10. The cable 10 can include parallel conductor wires 12, a core 14, a primary jacket 16, an optional barrier layer 18, a ground plane 20 (such as, but not limited to, a wire braid, a wire wrap, and/or a foil wrap), and a final jacket 22. The conductor wires 12 can be made of nickel-coated copper (or tin-plated copper or another conductive material) and are surrounded by the core 14 (e.g., a semi-conductive polymer material). For example, the core 14 can be extruded over and between the conductor wires 12 so that the wires 12 are embedded within and separated by the core 14. In this manner, the core 14 is considered to have a monolithic design. However, other self-regulating heating cables 10 may include separate, non-integral cores 14 surrounding the conductor wires 12. The core 14 can be surrounded by the primary jacket 16, which can be an electrically insulating polymer compound. On top of the primary jacket 16, the optional barrier layer 18 can act as a barrier for the interior components (e.g., protecting them from water and/or chemicals). The barrier layer 18 can be a metallic foil, such as aluminum foil. The ground plane 20 (e.g., a tinned-copper or other metallic braid or wrap) then surrounds the aluminum foil 18 or the primary jacket 16 and acts as a ground path. On top of the ground plane 20, the final jacket 22 acts as a mechanical protection layer.

Generally, heating cables may be terminated for connection to a power source, another cable or cables, a light, an end seal, etc. For such connections, an end portion of the heating cable can be stripped completely back to expose the conductors 12 so that they can be electrically connected to the power source, to conductors of another cable, to the light, or to electrically terminate them. This can be done in the field or in the factory. Additionally, some systems exist for heating cables that include insulation displacement technology to allow for connections to be made without complete wire stripping or special tools. Such systems include specific connectors for each connection type, for example, a T-branch connector, a single cable-to-cable connector, an X-branch connector, a power connector to single cable, a power connector to two cables, a power connector and T-branch, etc. However, these systems are factory-installed per user specifications. For example, lengths of heating cables with specific, factory-installed terminations or connectors are made available, though such terminations are not made in the field.

Some embodiments can provide low-profile modular connection systems that include a universal termination plug, that can be installed in the field, that provide a secure electrical connection to a cable, such as a self-regulating heating cable or a power cable, and a variety of modules that can be coupled directly to the termination plug in the factory or in the field. A user can therefore customize their connections by combining only the modules and/or plugs required for their specific installation. One example module includes a base module that allows for in-line connection of any number of heating cables to create power connections, splices, or branching circuits. Other example modules include accessory modules such as an end seal accessory module, a sensor accessory module, a broadcasting accessory module, a light accessory module, or a combination accessory module, among others. All such modules include a uniform mating connection that plugs into the universal termination plug.

For example, FIG. 2 illustrates an example heating cable 10 including a universal termination plug 30 according to some embodiments. The universal termination plug 30 can provide a secure electrical connection to the heating cable 10 and can be connected to an end of the cable 10. In some applications, the plug 30 can be coupled to the end of the heating cable 10 in a factory setting. In other applications, the plug 30 can be coupled to the end of the heating cable 10 in the field. Additionally, it should be noted that, while reference may be made herein to using the plug 30 in relation to a heating cable 10 and, more specifically, a self-regulating heating cable 10, the plug 30 and all other concepts discussed herein can also apply to power cables.

Referring still to FIG. 2, the plug 30 can include an outer housing 32 including a body portion 34 and an end plug portion 36. The outer housing 32 (e.g., within the body portion 34) can include internal components (not shown in FIG. 2) that electrically connect to conductor(s) 12 within the cable 10. Accordingly, based on these internal components, one type of plug 30 can be adapted for securing such electrical connection to conductors 12 within a heating cable 10 and another type of plug 30 can be adapted for securing such electrical connection to conductor(s) within a power cable. Externally, however, both types of plugs 30 can include a similar outer housing 32 having the same footprint or, at least, a similar end plug portion 36.

In some embodiments, the plug 30 can include a connector 38 at the end plug portion 36. For example, the connector 38 can be a male-type plug connector. In other embodiments, the connector 38 can be a female-type receptacle connector. Additionally, the connector 38 can provide electrical connection to the conductor(s) 12 of the attached cable 10 when a mating plug is coupled to the end plug portion 36. For example, the connector 38 can include terminal(s) (not shown in FIG. 2) electrically connected to the conductor(s) 12 of the attached cable 10. As such, when a mating plug is plugged into the end plug portion 36, terminal(s) within the mating plug can mechanically and electrically connect to the terminal(s) of the connector 38 to facilitate connection to the conductor(s) 12 of the attached cable 10. In some embodiments, the end plug portion 36 and/or the connector 38 can include one or more mechanisms to substantially block, cover, or conceal the electrical connection to the conductor(s) 12 until a mating plug is received so that an unplugged or "free" termination plug 30 is not considered "live."

As noted above, the termination plug 30 can be a universal plug that can be connected to a variety of modules. For example, FIG. 3 illustrates an end seal module 40 according to some embodiments. The end seal module 40 can act as an end seal to terminate the cable 10. As shown in FIG. 3, the end seal module 40 can include a housing 42 with a mating plug portion 44 and an end seal cap portion 46. Generally, the housing 42 can include a single opening at the mating plug portion 44, while the end seal cap portion 46 may be closed.

Accordingly, as shown in FIG. 3, the mating plug portion 44 can be configured to plug into the end plug portion 36 of the plug 30. For example, in some embodiments, the mating plug portion 44 can include a female-type receptacle connector 48 within the opening that receives a male-type plug connector 38 of the plug 30. In other embodiments, the mating plug portion 44 can include a male-type plug connector 48 that plugs into a female-type receptacle connector 38 of the plug 30. Additionally, in some embodiments, the connector 48 of the mating plug portion 44 can be configured to electrically connect to the plug 30 such that, when the components 30, 40 are mechanically coupled together (e.g., plugged into each other via a press-fit, screw-seal type fit, snap-in type fit, etc.), electrical connection is made between the conductor(s) 12 of the cable 10 and one or more components within the mating plug portion 44. Generally, however, the end seal cap portion 46 can include internal components to terminate the electrical connection. Furthermore, generally, plugging the mating plug portion 44 of the end seal module 40 into the end plug portion 36 of the termination plug 30 can serve to both electrically and mechanically couple the two components. Additionally, in some embodiments, additional mechanical connections, such as heat shrink tubing over the mating area, can be implemented to further facilitate the mechanical coupling.

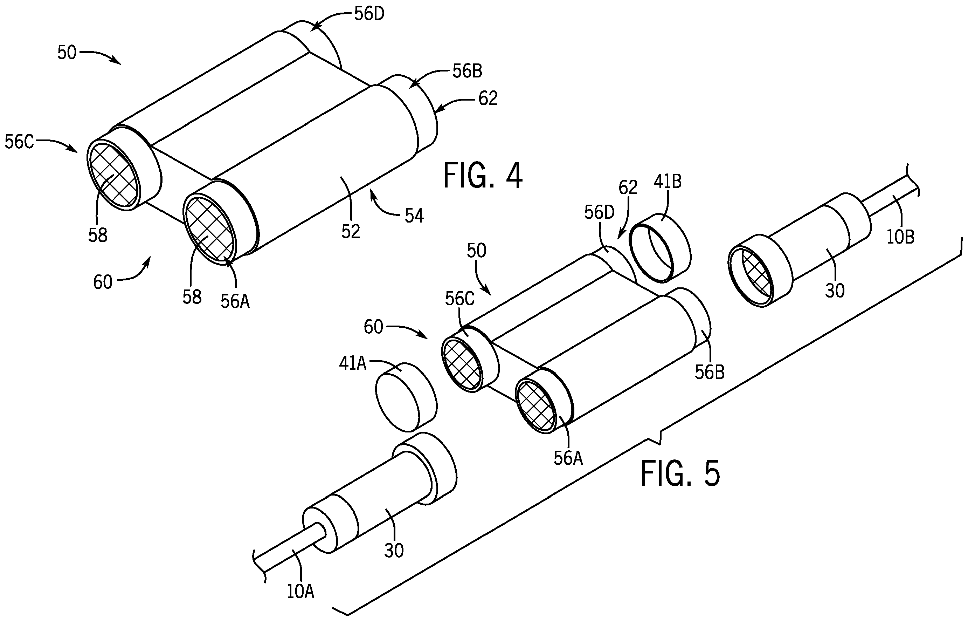

As another example, FIG. 4 illustrates a base module 50 according to some embodiments. The base module 50 can be used to provide an in-line connection of any number of cables 10, e.g., each containing a termination plug 30, to create power connections, splices, or any number of branching circuits. As shown in FIG. 4, the base module 50 can include a housing 52 with a body portion 54 and four mating plug portions 56 (specifically, mating plug portion 56A, mating plug portion 56B, mating plug portion 56C, and mating plug portion 56D). The mating plug portions 56 of the base module 50 of FIG. 4 can generally be the same as the mating plug portion 44 of the end seal module 40 of FIG. 3 and, thus, the above description of the mating plug portion 44 of the end seal module 40 of FIG. 3 can apply to the mating plug portions 56 of the base module 50. That is, the housing 52 can include an opening at each mating plug portion 56 to provide access to respective connectors 58 at each opening.

Additionally, still referring to FIG. 4, the housing 52 (e.g., at the body portion 54) can include internal components that electrically connect connectors 58 of mating plug portions 56 along a first end 60 of the base module 50 to connectors 58 of mating plug portions 56 along a second end 62 of the base module 50. As such, the base module 50 can facilitate a variety of electrical connections between one or more cables 10 coupled to (e.g., plugged into) the first end 60 and one or more cables 10 coupled to (e.g., plugged into) the second end 62. For example, three different connection configurations using the base module 50 are illustrated in FIGS. 5-7.

More specifically, FIG. 5 illustrates an example power connection or splice configuration using the base module 50. In this configuration, a first cable 10A, including a plug 30, is plugged into a first mating plug portion 56A on the first end 60 and a second cable 10B is plugged into a second mating plug portion 56B on the second end 62, wherein the base module 50 serves to electrically connect, or splice together the first cable 10A and the second cable 10B. Furthermore, a first end seal cap 41A can be plugged into a third mating plug portion 56C on the first end 60 and a second end seal cap 41B can be plugged into a fourth mating plug portion 56D on the second end 62. In some embodiments, the end seal caps 41 can be mechanical caps configured to cover a mating plug portion 56. In other embodiments, the end seal caps 41 can include electrical components (similar to those of the end seal module 40) that can electrically connect to a connector 58 within the mating plug portion 56 to serve as an electrical termination at the respective connector 58.

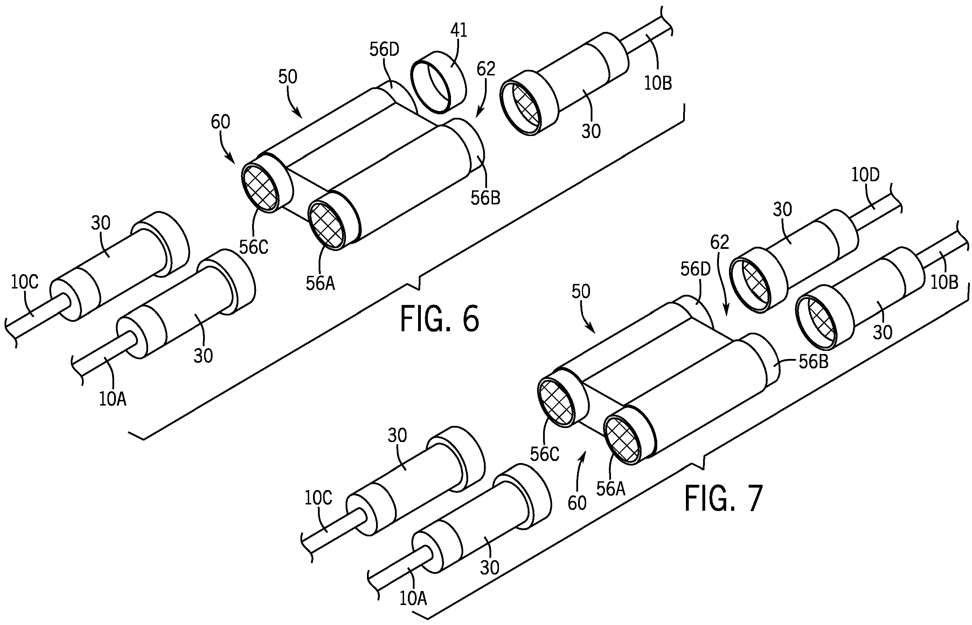

Additionally, FIG. 6 illustrates an example power tee configuration using the base module 50. In this configuration, a first cable 10A is plugged into a first mating plug portion 56A on the first end 60, a second cable 10B is plugged into a second mating plug portion 56B on the second end 62, and a third cable 10C is plugged into a third mating plug portion 56C on the first end 60, wherein the base module 50 serves to electrically connect, or splice together, the first cable 10A, the second cable 10B, and the third cable 10C, forming a three-way splice or power tee. Furthermore, a first end seal cap 41 can be plugged into a fourth mating plug portion 56D on the second end 62.

Furthermore, FIG. 7 illustrates an example X-splice configuration using the base module 50. In this configuration, a first cable 10A is plugged into a first mating plug portion 56A on the first end 60, a second cable 10B is plugged into a second mating plug portion 56B on the second end 62, a third cable 10C is plugged into a third mating plug portion 56C on the first end 60, and a fourth cable 10D is plugged into a fourth mating plug portion 56D on the second end 62, wherein the base module 50 serves to electrically connect, or splice together, the first cable 10A, the second cable 10B, the third cable 10C, and the fourth cable 10D, forming an x-splice or x-branch connection.

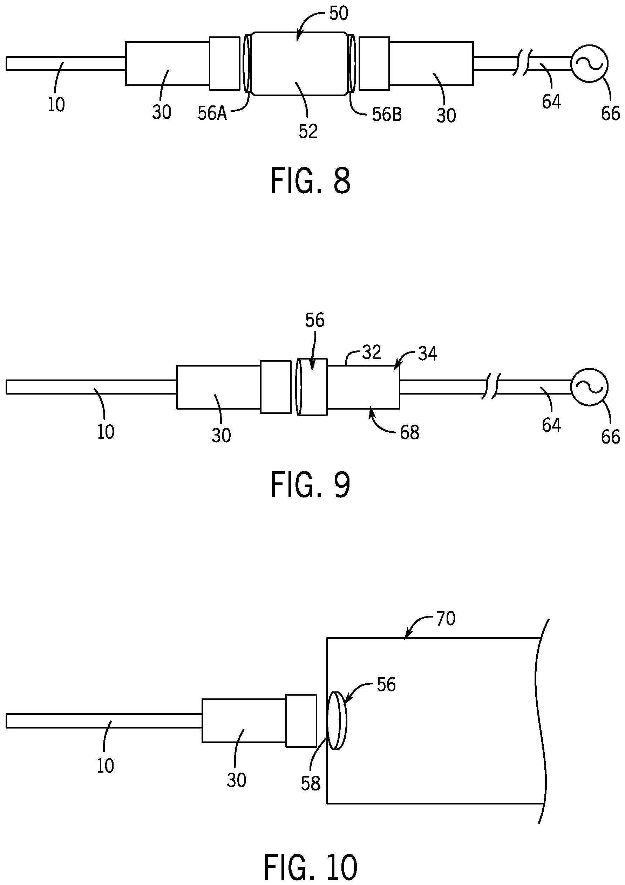

Additionally, while FIGS. 5-7 illustrate the base modules 50 connected between two or more cables 10, in some applications, the base module 50 may facilitate connection between a cable 10 and a power source. FIG. 8 illustrates such an example configuration according to some embodiments. That is, FIG. 8 illustrates a heating cable 10 with a termination plug 30, a power cable 64, coupled to a power source 66, with a termination plug 30, and a base module 50 configured to connect the power cable 64 to the heating cable 10. Accordingly, looking to the base module 50 of FIG. 8, one of the mating plug portions 56A can be dedicated to receiving the termination plug 30 from the heating cable 10, and another mating plug portion 56B can be dedicated to receiving the termination plug 30 from the power cable 64. Alternatively, in some embodiments, the mating plug portions 56 can universally receive termination plugs 30 from heating cables 10 or power cables 64. The internal components within the housing 52 of the base module 50 can facilitate power connections from the power cable 64 to the heating cable 10. Additionally, in some applications, the base module 50 can include two mating plug portions 56, as shown in FIG. 8, or can include three, four, or more mating plug portions 56 to enable coupling the power cable 64 to multiple heating cables 10.

Alternatively, in some applications, as shown in FIG. 9, a power cable 64 can be coupled to a dedicated power termination plug 68. The power termination plug 68 can be similar to the termination plug 30, in that it may include an outer housing 32 with a body portion 34. However, the outer housing 32 of the power termination plug 68 may also include a mating plug portion 56. In this manner, an end termination plug 30 of a heating cable 10 can be directly coupled to (e.g., plugged into) a power termination plug 68 of a power cable 64. The internal components housed within the outer housing 32 of the power termination plug 68 can include the electrical connections necessary to facilitate electrical coupling between the heating cable 10 and the power cable 64.

Furthermore, in some embodiments, one or more components of a heat trace system can be configured with a mating plug portion 56 to receive a termination plug 30 of a connected heating cable 10. For example, FIG. 10 illustrates heat trace system component 70 that includes a mating plug portion 56. The heat trace system component 70 may be, for example, a junction box, a controller, or another component that may be coupled to a heat trace cable 10. The mating plug portion 56 of the heat trace system component 70 can include a connector 58 that facilitates electrical connections within the component 70 when the termination plug 30 of the heat trace cable 10 is plugged into the mating plug portion 56. Accordingly, this modular system can reduce the need for splicing any type of cable connections in the field.

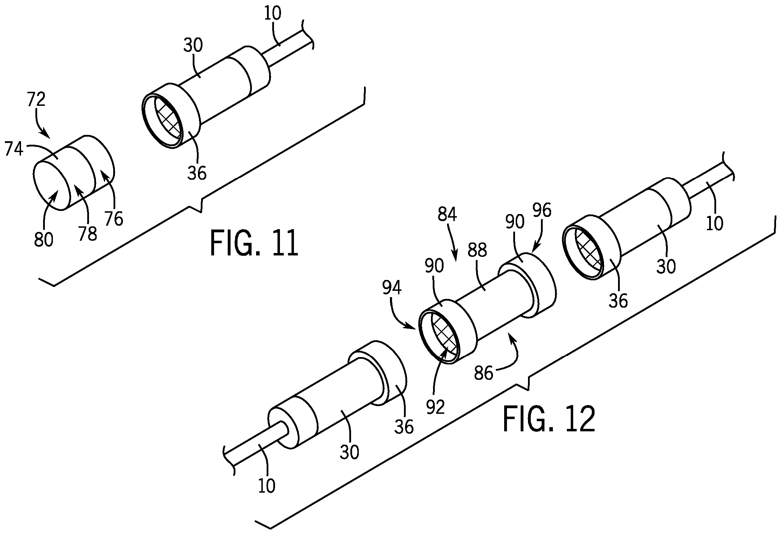

According to yet another example, FIG. 11 illustrates a lighted end seal module 72 according to some embodiments. The lighted end seal module 72 can be used in a similar manner as the end seal module 40 of FIG. 3, e.g., to terminate the cable 10. For example, the lighted end seal module 72 can include a housing 74 with a mating plug portion 76 and a lighted end seal cap portion 78. The mating plug portion 76 of the lighted end seal module 72 of FIG. 11 can be the same as or similar to the mating plug portion 44 of the end seal module 40 of FIG. 3 and, thus, the above description of the mating plug portion 44 of the end seal module 40 of FIG. 3 can apply to the mating plug portion 76 of the lighted end seal module 72. Additionally, internally, the lighted end seal cap portion 78 can include components to terminate the electrical connection, similar to the end seal cap portion 46 of the end seal module 40 of FIG. 3. However, the lighted end seal cap portion 78 can further include a light source 80, such as one or more light emitting diodes (LEDs) or other light source(s), that draws power from the heating cable 10 via a connector (not shown) of the mating plug portion 76. As such, when power is applied to a connected heating cable 10, the lighted end seal module 72 may be lit. Additionally, while the lighted end seal module 72 of FIG. 11 is configured so that the light source 80 is in-line with the heating cable 10, in some embodiments, the housing 74 may take on other form factors such that the light source 80 extends perpendicular to the heating cable 10. Furthermore, in some embodiments, the light source 80 can include LEDs that emit red light, green light, or another color light.

As yet another example, FIG. 12 illustrates an accessory module 84 according to some embodiments. The accessory module 84 can be connected between cables 10 and can include one or more internal accessories that, in some applications, can draw power from the cable(s) 10 via the electrical connection. As shown in FIG. 12, the accessory module 84 can include a housing 86 with a body portion 88 and two mating plug portions 90 configured to receive end plug portions 36 of termination plugs 30.

Additionally, still referring to FIG. 12, the body portion 88 can include internal components that electrically connect a connector 92 of the mating plug portion 90 along a first end 94 of the accessory module 84 to a connector 92 of the mating plug portion 90 along a second end 96 of the accessory module 84. As such, the accessory module 84 can incorporate one or more accessories that draw power from the electrical connection between the cables 10 coupled to (e.g., plugged into) the first end 94 and the second end 96 and/or sense one or more variables related to properties of the cables 10 and/or the surrounding environment. For example, in some applications, a single cable 10 can be cut where a user desires to position an accessory module 84, the two cut ends can be terminated with respective termination plugs 30, and the accessory module 84 can be connected between the termination plugs 30. As another example, two cables 10, each including termination plugs, 30 can be connected via the accessory module 84. In some embodiments, accessories within an accessory module can include, but are not limited to sensors, broadcasting components, light sources, controllers, etc.

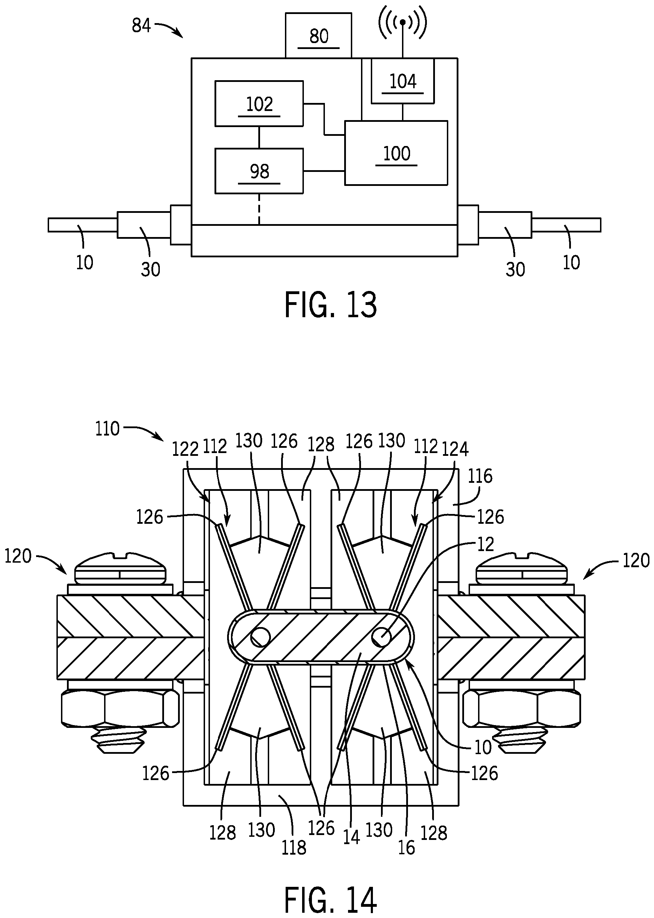

For example, FIG. 13 illustrates an example schematic of an accessory module 84 according to some embodiments. As shown in FIG. 13, the accessory module 84 can include a sensor 98, a controller 100, a power supply 102, a broadcasting component 104, and/or a light source 80. It should be noticed that, in some applications, one type of accessory module 84 can include one or more accessories or a combination of accessories (e.g., sensors, broadcast modules, and/or lights, etc.) and another type of accessory module 84 can include one or more other accessories or another combination of accessories. Externally, however, all types of accessory modules 84 may include the same mating plug portions 90 for connection between cables 10. Furthermore, in some embodiments, all accessory modules 84 can be identical in size. However, in other embodiments, some accessory modules 84 may be longer or shorter (or larger or smaller) than others. Additionally, while FIGS. 12 and 13 illustrate an accessory module 84 connected between two cables 10, in some applications, the accessory module 84 may facilitate connection between a cable 10 and a power source 66 or power cable 64.

Referring still to FIG. 13, in some embodiments, the sensor 98 can be a temperature sensor configured to monitor a temperature, a current sensor configured to monitor current through the cables 10, or another type of sensor. In some embodiments, the sensor 98 can draw power directly from a connected cable 10. However, in other embodiments, the sensor 98 can draw power from a separate power source, such as the power supply 102 or an external power supply (not shown). Additionally, the sensor 98, and the power supply 102, can be connected to the controller 100. That is, the controller 100 can be powered by the cables 10, the power supply 102, or an external power supply, and can obtain data from the sensor 98. In embodiments where the controller 100 and the sensor 98 are configured to draw power from an external power supply, the accessory module 84 may not include the internal power supply 102 or may still include the power supply 102 as an alternative power source.

Additionally, still referring to FIG. 13, the accessory module 84 can include the broadcasting component 104, connected to the controller 100. For example, the broadcasting component 104 can include a component that facilitates wireless communication, such as a WiFi component, a Bluetooth component, or others. In such embodiments, the controller 100 can obtain data from the sensor 98 and communicate with an external source, via the broadcasting component 104, based on the data. In some embodiments, the controller 100 can send the raw data from the sensor 98, can process the data and send processed data, or can process the data and send communications, such as alerts, flags, reports, etc., based on the data. For example, in some embodiments, the external source can include an electronic heat trace (EHT) controller of a heat trace system (not shown), a supervisor or management system of a heat trace system, or another source. In another example, the external source can include a mobile phone, tablet, or other computing device configured to communicate with the controller 100 via a Bluetooth component (e.g., via Bluetooth pairing) or a WiFi component (e.g., via a local area network, wide area network, etc.). Accordingly, in some applications, an accessory module 84 can be spliced into a cable 10, in the field, to allow for monitoring and reporting of variables related to the cable 10 and/or the surrounding environment in location (e.g., at the "edge" or at the accessory module 84) or in a control room or another location.

Furthermore, still referring to FIG. 13, in some embodiments, the accessory module 84 can include a light source 80 that draws power from a connected cable 10 or from the power supply 102. As such, in some embodiments, the accessory module 84 can perform the same function as the lighted end seal module 72 described above, e.g., emitting light in response to current draw through the heating cables 10. In further embodiments, the accessory module 84 can perform additional functions with the light source 80. For example, the controller 100 can control when the light source 80 emits light based on, e.g., current draw or another variable sensed by the sensor 98. Additionally, in some embodiments, the lighted end seal module 72 itself may be considered an accessory module. Furthermore, in some applications, any of the above accessories may be incorporated into the base module 50 (comprising two or more mating plug portions 56) or the end seal module 40 (comprising a single mating plug portion 44), forming an accessory module.

Accordingly, in light of the above, some embodiments provide a connection system for one or more cables 10 that can include universal termination plugs connected to cut ends of cables and one or more of the modules described above. This connection system can allow for easy field terminations without trade knowledge or special permits due to the "plug and play" nature of the modular connections. For example, in some embodiments, cables 10 can include factory-installed termination plugs 30 on their ends, allowing for a user to easily install the cables 10 using various modules. Furthermore, users can additionally connect termination plugs 30 along cut ends of cables 10 in the field for additional modular connections. This connection system can also allow heat trace cable systems, with termination plugs, to be prefabricated on pipes or roofing materials and quickly connected on site via desired modules. Such prefabrication can significantly reduce man hours in the field and associated costs to have those with trade knowledge perform field connections. Additionally, the connection system (e.g., the termination plugs 30 and associated modules) can have a low profile form factor. For example, as shown in FIGS. 3-9 and 11-12, the modules can include a substantially low profile to allow for installation under insulation. However, in some applications, one or more modules, such as a lighted end seal module 72 or accessory module 84 can include light sources 80 that extend outside this low profile form factor to provide a convenient alert or alarm system for nearby users.

Furthermore, the connection system (e.g., the termination plugs 30 and associated modules) can provide a user with the ability to customize their system through the use of accessory modules, and can provide new features to the system through new accessory modules or other modules without requiring full system redesigns. More specifically, the connection system can allow users to tailor systems to their requirements through the different modules, and will also allow for future upgrades as needed. That is, new features can be introduced into a system via small module packages (all including mating plug portions 44, 56, 76, 90 for easy connection into termination plugs 30 in the system) without having to upgrade or redesign the existing "base" system. The uniform nature of the termination plugs 30 for both heating cables 10 and power cables 64 can allow for a variety of electrical connections and accessories in a connection system through easy-to-use plug and play modules. Furthermore, any number of electrical connections between cables 10 can be facilitated through a single base module 50, and any number of accessories can be provided within the accessory module footprint 84.

Referring back to FIG. 2, as described above, the termination plug 30 of some embodiments can include a housing 32 with a body portion 34 and an end plug portion 36. The body portion 34 can include internal components (not shown in FIG. 2) that permit electrical connection to conductor(s) 12 within the cable 10. Some existing connectors for splicing or terminating a heating cable 10 require fully stripping the cable down to the conductors 12 and fastening to the conductors 12 through mechanical means such as crimps or screw terminals. According to some embodiments, solutions are provided that require minimal preparation and stripping of the cable, minimize or eliminate tools needed to make the connection, and provide a better electrical connection that can handle a higher current load than standard insulation displacement connectors.

For example, some embodiments provide methods of making electrical connections with electric heat trace parallel conductors 12, without the need to remove the primary jacket 16 or core material 14. Such electrical connection can be achieved by different means of a termination mechanism piercing or cutting through the primary jacket 16 and core 14 and making contact with the conductors 12. Different configurations for achieving this electrical connection, according to some embodiments, are illustrated in FIGS. 14-49, and any one of these configurations described herein can be implemented as a termination assembly within the body portion 34 of the termination plug 30 shown in FIG. 2. That is, any of the termination assembly configurations shown and described below with respect to FIGS. 14-49 can serve to electrically connect conductors 12 of a cable 10 to the connector 38 within the termination plug 30.

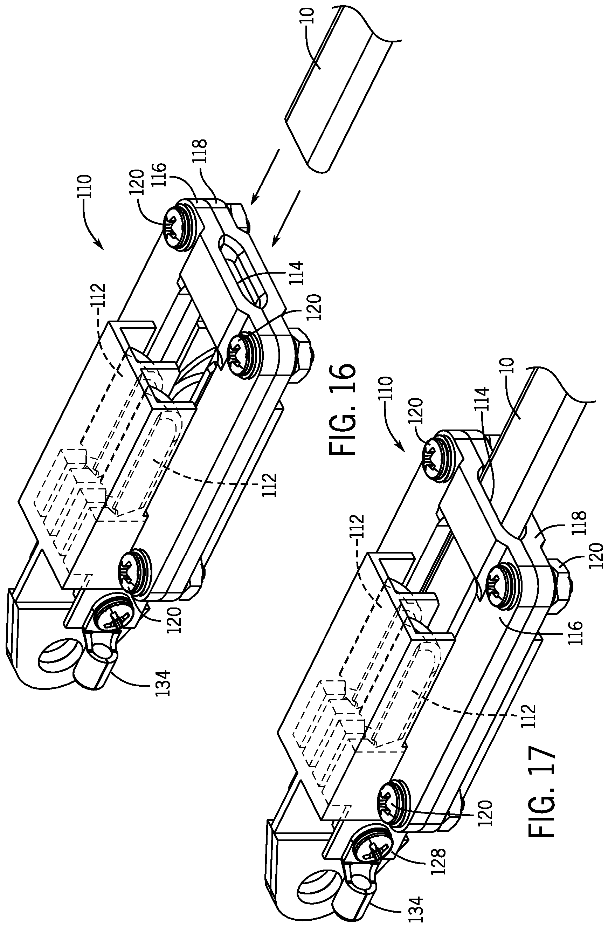

Accordingly, FIGS. 14, 15, 16, and 17 illustrate an example blade configuration 110 according to some embodiments. The blade configuration 110 can include first and second arrays of blades 112 made of a conductive material, which can be spaced apart a distance generally equivalent to a distance between the conductors 12 of a heating cable 10. As shown in FIGS. 16 and 17, the configuration 110 can also include an insertion channel 114 in order to align the conductors 12 of the heating cable 10 with the blade arrays 112. The heating cable 10 (e.g., with the final jacket 22 and braid 20 stripped back) can be inserted longitudinally through the channel 114, and by pushing the heating cable 10 through the blade arrays 112, each blade array 112 cuts through the primary jacket 16 and the core material 14 and makes contact with the conductors 12.

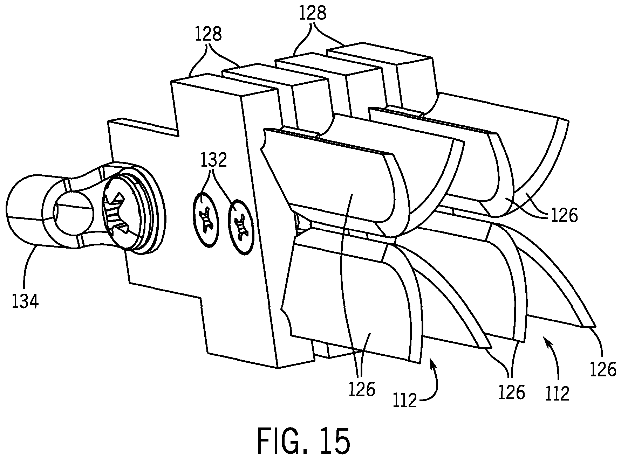

More specifically, as shown in FIGS. 14, 16, and 17, the blade configuration 110 can include a first, or upper, insulation housing 116 and a second, or lower, insulation housing 118 coupled together via fasteners 120. The insulation housings 116, 118 can be made of an electrically insulating material and, when coupled together, can form the insertion channel 114 and two blade channels 122, 124, where each blade channel 122, 124 can house a respective blade array 112. Regarding the blade arrays 112, as best shown in FIGS. 14 and 15, each blade array 112 can include four blades 126, two blade holding clamps 128, and two blade wedges 130. The blade holding clamps 128 can be coupled together (e.g., with fasteners 132) to sandwich together two upper blades 126 with a blade wedge 130 therebetween and two lower blades 126 with a blade wedge 130 therebetween, thereby causing the blades 126 to form an "X" shape. Additionally, in some embodiments, each blade array 112 can include more than four blades 126, forming the X shape, to be arranged radially around a respective conductor 12. The four (or more) blades 126 forming the X shape can help to center the conductor 12 within the configuration 110 to help ensure good electrical contact with the conductor 12.

As shown in FIGS. 14-17, the blades 126 extend outward from the blade holding clamps 128 and can receive a cable 10 inserted through the insertion channel 114. The blades 126 are positioned close enough to each other such that, when the cable 10 is pushed into the blades 126 toward the blade holding clamps 128, the blades 126 can cut into the primary jacket 16 and the core material 14 of the cable 10 and make contact with the conductors 12. This configuration 110 can thus provide a contact length, e.g., in contrast to a single contact point, between the blades 126 and the conductors 12 both from above and below the conductors 12. Furthermore, this contact is provided by the user pushing the cable 10 through the insertion channel 114 without the need for additional tools to make the connection between the blades 126 and the conductors 12.

In some embodiments, the blades 126, the blade holding clamps 128, and/or the blade wedges 130 can be made of conductive materials, such as brass, bronze, steel, stainless steel, or another suitable material, to form an electrical connection with the conductors 12. Furthermore, as shown in FIGS. 15-17, conductive ring terminals 134 can be coupled to at least one blade holding clamp 128 of each blade array 112. As such, the configuration 110 of FIGS. 15-17 includes two ring terminals 134, though may include additional ring terminals 134 in some embodiments. When the blade configuration 110 is assembled within a termination plug 30, the ring terminals 134 can receive plugs or wires from within the body portion 34 of the plug 30 to facilitate connection between the connector 38 of the plug 30 and the conductors 12 of the cable 10 via the ring terminals 136, the blade holding clamps 128 (and/or the blade wedges 130), and the blades 126. Alternatively, in some embodiments, wires can be brazed directly to the blade holding clamps 128, eliminating the need for the ring terminals 134. Accordingly, wherever ring terminals 134 are shown and described herein, such ring terminals 134 may be replaced by direct wire connections.

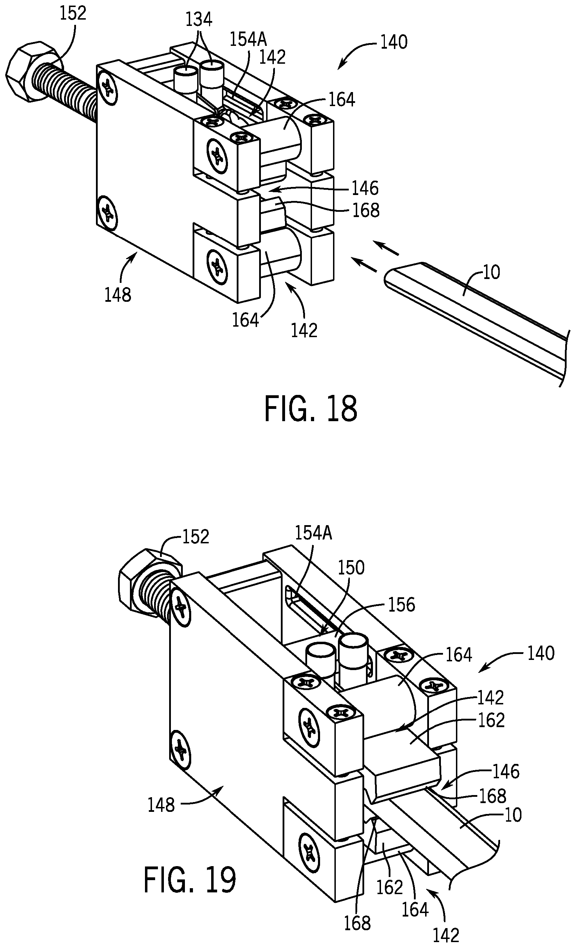

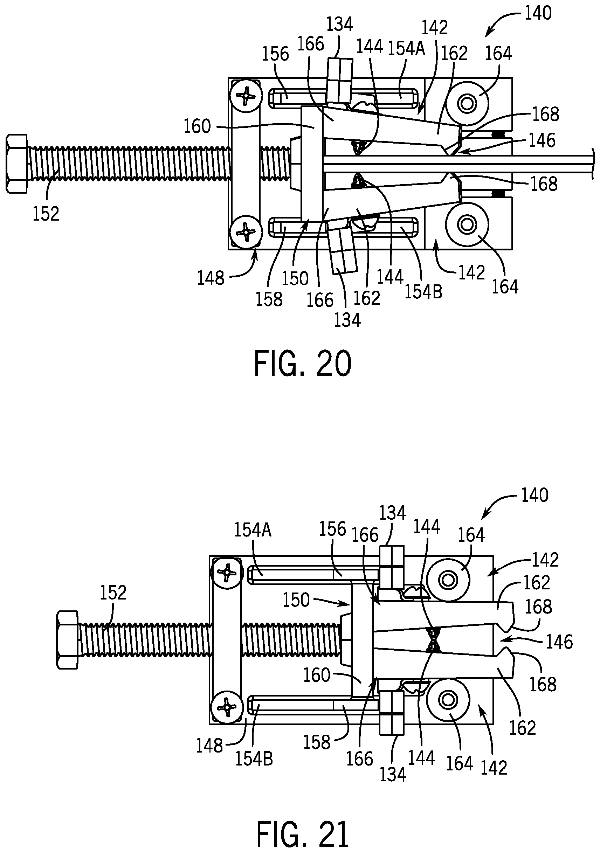

FIGS. 18, 19, 20, and 21 illustrate another example connection configuration 140 (e.g., a spike configuration) according to some embodiments. Generally, a spike configuration 140 can include multiple sharp spikes that pierce the primary jacket 14 and the core material 14 to clamp a respective conductor 12 from at least two sides. According to one example, as shown in FIGS. 18-21, the spike configuration 140 can include two pivoting assemblies 142 that are to be situated parallel to the flat surfaces of an obround electric heat trace cable 10. Each of the pivoting assemblies 142 can include a set of two sharp spikes or protrusions 144 (shown in FIGS. 20 and 21), with each protrusion 144 aligning with one conductor 12 of an inserted heat trace cable 10. More specifically, prior to and during cable insertion, the pivoting assemblies 142 can be arranged at an angle with respect to the heat trace cable 10, as shown in FIG. 20. As such, the heat trace cable 10 can be inserted longitudinally into a channel 146 formed between the two pivoting assemblies 142. Once the cable 10 seated, the pivoting assemblies 142 rotate to close down onto the heating cable 10 until they are parallel with the heating cable 10, and, as a result, the sharp protrusions 144 pierce through the primary jacket 16 and the core 14 of the heating cable 10, making contact with the conductors 12.

More specifically, as shown in FIGS. 18-21, the spike configuration 140 can include a housing 148, a seat 150, a screw 152, and the two pivoting assemblies 142. The seat 150 can translate within the housing 148 along a track 154, for example, as controlled by rotation of the screw 152, which extends through a rear of the housing 148. That is, the housing 148 can include an upper track 154A and a lower track 154B defined within interior surfaces thereof. As shown in FIGS. 20 and 21, the seat 150 can include an upper portion 156 that slides along the upper track 154A and a lower portion 158 that slides along the lower track 154B. The seat 150 can further include a base 160 between the upper portion 156 and the lower portion 158 that is in contact with the screw 152. Additionally, each of pivoting assemblies 142 (e.g., an upper pivoting assembly and a lower pivoting assembly) can include a pivoting component 162, two side-by-side protrusions 144, and a roller mount 164 secured to the housing 148. The protrusions 144, such as screws, can be made of conductive material to form an electrical connection with the conductors 12 and can each include a respective ring terminal 134 coupled thereto.

In an "open" position, shown in FIGS. 18 and 20, the seat 150 can be located at a reward-most position adj acent to a rear of the housing 148. This seat position allows the pivoting components 162 to retreat into the housing 148, where rear ends 166 of the pivoting components 162 rotate outward toward a respective upper portion 156 or lower portion 158 of the seat 150. As a result, the protrusions 144 extend away from the channel 146, allowing a cable 10 to be inserted into the channel 146 until it abuts the seat 150.

A user can then rotate the screw 152, causing the seat 150 to move toward a "closed" position, where the seat 150 is located at a forward-most position adjacent a front of the housing 148, as shown in FIGS. 19 and 21. This seat position causes the pivoting components 162 to extend out of the housing 148 and, through the translational movement, the pivoting components 162 contact each roller mount 164 in a manner that causes the ends 166 of the pivoting components 162 to rotate toward a position parallel with the cable 10. As a result, by the time the pivoting components 162 reach the closed position, the protrusions 144 are rotated into the cable 10, piercing through the primary jacket 16 and the core 14 of the heating cable 10, and making contact with the conductors 12 (note that the cable 10 is removed from the view in FIG. 21 for clarity). This contact is thus provided by the user pushing the cable 10 through the insertion channel 146 and rotating the screw 152, thus allowing the user to make the connection to the conductors 12 manually (e.g., without a tool) or with a tool for rotating the screw. Accordingly, when the spike configuration 140 is assembled within a termination plug 30 in the closed position, the ring terminals 134 can facilitate connection between the connector 38 of the plug 30 and the conductors 12 of the cable 10 via the ring terminals 134 and the protrusions 144. Additionally, through this translational and rotational movement, cleats 168 on front ends each pivoting component 162 can contact the cable 10, e.g., to provide strain relief.

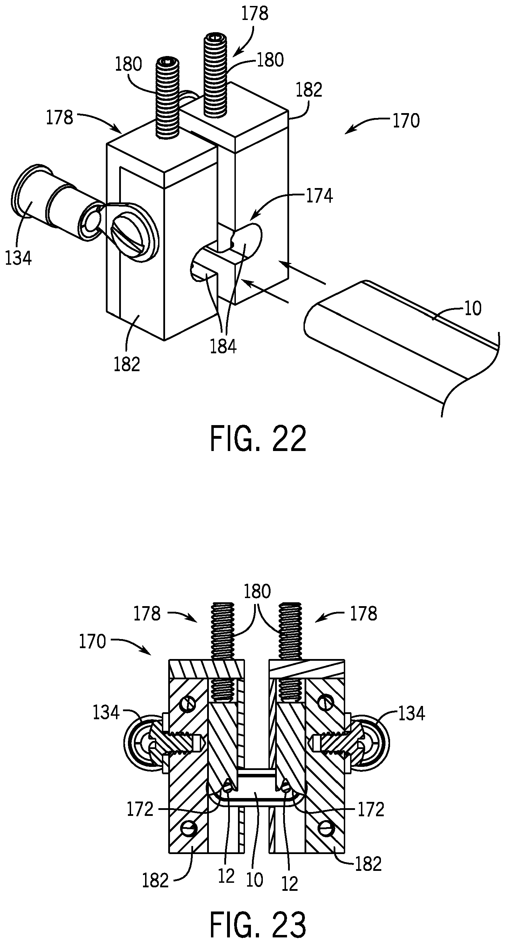

FIGS. 22, 23, and 24 illustrate yet a further example connection configuration 170 (e.g., a punch configuration) according to some embodiments. The punch configuration 170 can include sets of shears 172 (shown in FIG. 23) that align with the parallel conductors 12 of a cable 10. Each set of shears 172 can pierce one side of the cable 10 only (such as from above the cable 10, as shown in FIG. 23), or shears 172 can pierce both sides of the cable 10. The parallel heat trace cable 10 is inserted longitudinally into a channel 174. The shears 172 are pushed towards the cable 10, either manually (e.g., without a tool) or with mechanical assistance via a tool, piercing the primary jacket 16 and the core 14, and making contact with the conductors 12.

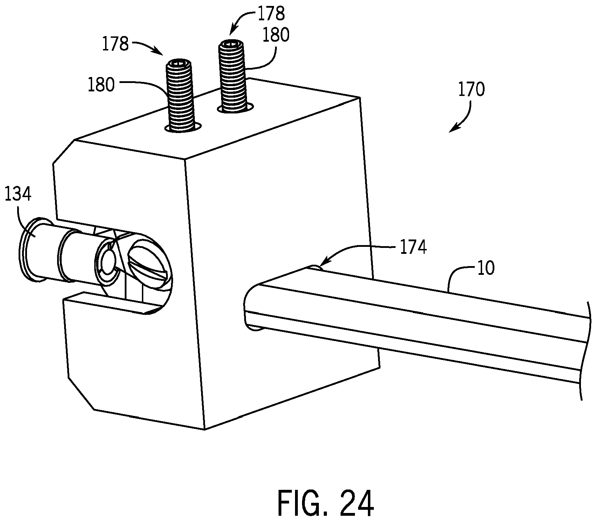

More specifically, as shown in FIGS. 22-24, the configuration 170 can include an insulation housing 176 (shown in FIG. 24) and two shear assemblies 178. As shown in FIGS. 22 and 23, each shear assembly 178 can include one or more shears 172, a screw 180, and a shear housing 182, as well as a ring terminal 134 coupled to the shear housing 182. The shear housings 182 can support the shears 172 and screws 180 and can each define a half channel 184 which, collectively, define the channel 174 that receives the cable 10. In some embodiments, some or part of the shear assemblies 178, including the shears 172, the screws 180, and/or the shear housings 182 can be made of conductive material to form an electrical connection with the conductors 12, while the insulation housing 176 can be made of insulative, or non-conductive material. Additionally, in some embodiments, as shown in FIGS. 22 and 23, the shear assemblies 178 can be physically and/or electrically separated.

Referring still to FIGS. 22-24, in an "open" position, the screws 180 (or another mechanical component capable of moving the shears 172) can be rotated in a manner that causes the shears 172 to be positioned out of the channel 174, allowing a cable 10 to be inserted therein. In a "closed" position, the screws 180 can be manipulated to press the shears 172 down onto the cable 10 so that the shears 172 enter the channel 174 and pierce through the primary jacket 16 and the core 14 of the heating cable 10, and make contact with the conductors 12. Accordingly, when the punch configuration 170 is assembled within a termination plug 30 in the closed position, the ring terminals 134 can facilitate connection between the connector 38 of the plug 30 and the conductors 12 of the cable 10 via the ring terminals 134 and the shear assemblies 178.

Generally, the insulation housing 176 can house the shear assemblies 178 and maintain them in position relative to one another, supporting the shear assemblies 178 to hold the cable 10 in the closed position. In some embodiments, the insulation housing 176 can be assembled over the shear assemblies 178 before or after a cable 10 is connected to the shears 172. More specifically, according to one installation method, the insulation housing 176 is first assembled over the shear assemblies 178. The cable 10 be inserted into the channel 174, and both shear assemblies 178 can be manipulated into the closed position so that the shears 172 contact the conductors 12 of the cable 10.

According to another installation method, each shear assembly 178 can be separately installed onto the cable 10, and the insulation housing 176 can be assembled over the shear assemblies 178. More specifically, a cable 10 can be positioned in a half channel 184 of a shear housing 182 of one shear assembly 178 (e.g., the cable 10 can be moved longitudinally through the half channel 184 or moved laterally into the half channel 184). The shear assembly 178 can then be manipulated into the closed position so that the shear(s) 172 contact one conductor 12 of the cable 10. Before or after this manipulation, the cable 10 can further be positioned in a half channel 184 of a shear housing 182 of the other shear assembly 178 (e.g., the cable 10 can be moved longitudinally through the half channel 184 or moved laterally into the half channel 184). The second shear assembly 178 can also be manipulated into the closed position so that the shear(s) 172 contact the other conductor 12 of the cable 10. Once both shear assemblies 178 are in their closed positions, the insulation housing 176 can be assembled over the shear assemblies 178.

Additionally, still referring to FIGS. 22-24, in some embodiments, by having separate shear assemblies 178, this configuration 170 can accommodate heating cables 10 with different distances between conductors 12. For example, in some embodiments, the insulation housing 176 can accommodate shear assemblies 178 that are spaced apart at different distances. Alternatively, in some embodiments, this spike configuration 170 can further include one or more additional features or components to accommodate heating cables 10 with different distances between conductors 12. For example, in some embodiments, the shears 172 can be flared prongs to connect to conductors 12 across a range of distances. In another example, in some embodiments, the configuration 170 can include a spring or other component (not shown) that can allow for the shears 172 to move closer together or further apart to accommodate a range of distances between conductors 12.

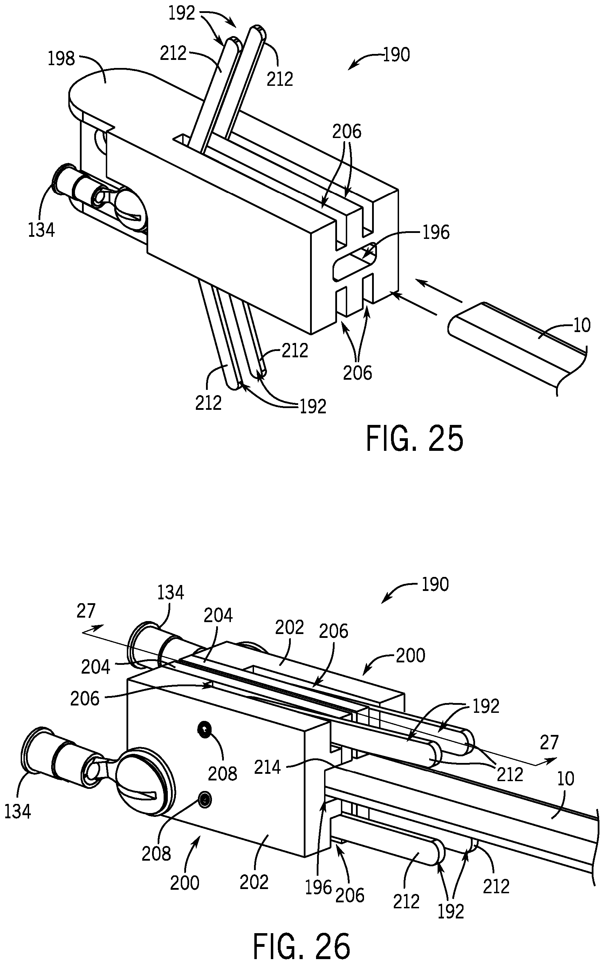

FIGS. 25, 26, 27, 28, and 29 illustrate yet another example connection configuration 190 (e.g., a cam configuration) according to some embodiments. The cam configuration 190 can include one or more cams 192 aligned with each parallel conductor 12, with a portion of each of the cams 192 nearest a conductor 12 having ridges or teeth 194. For example, a cam 192 can be positioned on one side of the cable 10 adjacent a conductor 12, or cams 192 can be positioned on both sides of the cable 10 adjacent the conductor 12, such as above and below the conductor 12. In use, a heat trace cable 10 can be inserted longitudinally into a channel 196. The cams 192 are then rotated (e.g., manually or through mechanical assistance) so that the teeth 194 cut through the primary jacket 16 and the core 14, allowing the cam 192 to make contact with the conductors 12.

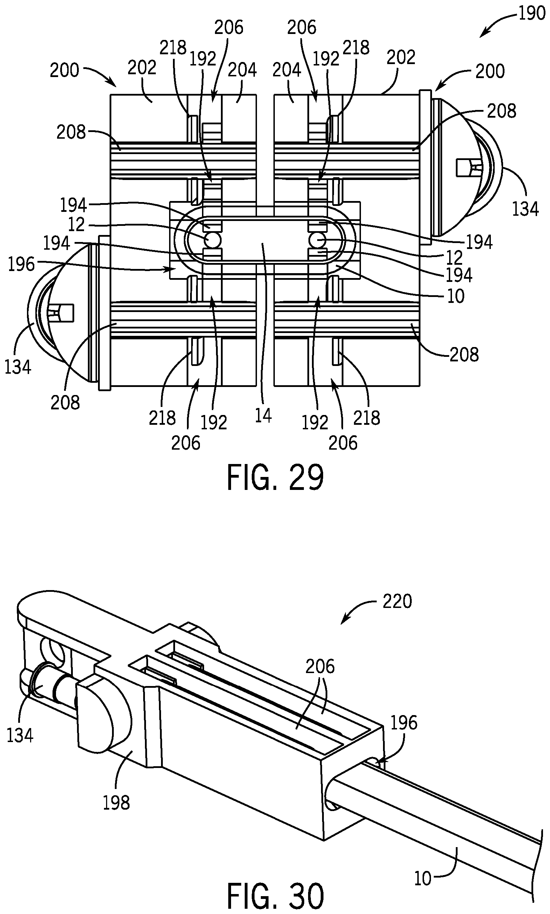

More specifically, as shown in FIGS. 25-29, the cam configuration 190 can include an insulation housing 198 (shown in FIGS. 25, 27, and 28) and two frame assemblies 200, each including a base frame 202 (shown in FIGS. 26-29) and a frame plate 204 (shown in FIG. 26 and 29). The insulation housing 198 can hold the frame assemblies 200 and can include openings that define the channel 196 for receiving a cable 10 and openings that define cam channels 206 to allow for rotation of each cam 192. As shown in FIG. 26 (where the insulation housing 198 has been removed for clarity), each frame assembly 200 can include a respective base frame 202 coupled to a frame plate 204, e.g., with fasteners (not shown). When coupled together, each frame assembly 200 can further define the cam channels 206 to allow for rotation of an upper cam 192 and a lower cam 192, and can each define a half channel 214 which, collectively, define the channel 196 that receives the cable 10. In some embodiments, as shown in FIGS. 26 and 29, the frame assemblies 200 can be physically and/or electrically separated.

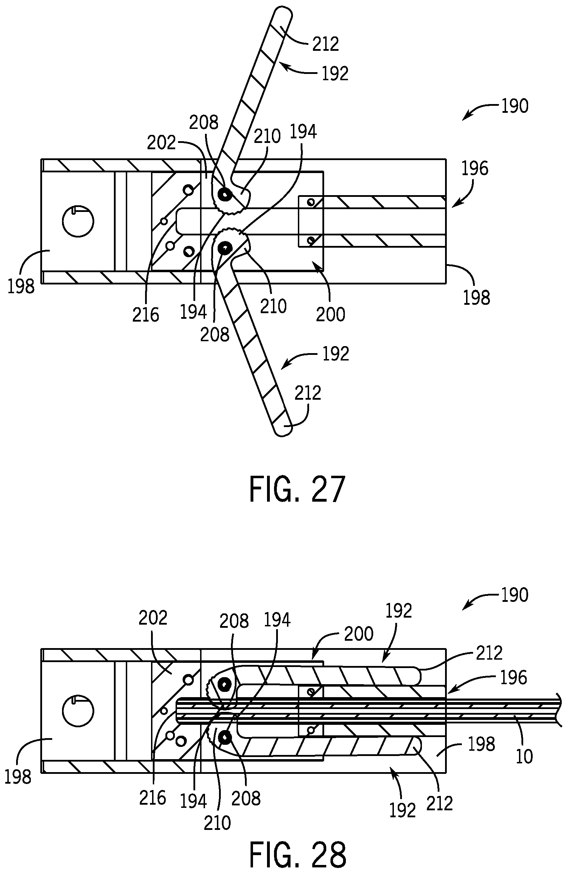

Referring to FIGS. 26-29, a respective cam 192 can be positioned between a base frame 202 and a frame plate 204 within the cam channel 206 and can be rotatable about a pivot member 208, which may be anchored to the base frame 202 and the frame plate 204. As a result, the cam 192 rotates relative to the base frame 202. Additionally, in some embodiments, one or more washers 218 (shown in FIG. 29) may be positioned around the pivot member 208 between a cam 192 and the base frame 202 and/or the frame plate 204. Each cam 192 can rotate between a first "fully open" position, shown in FIGS. 25 and 27, and a second "fully closed" position, shown in FIGS. 26, 28 and 29. That is, in the fully open position, shown in FIGS. 25 and 27, each cam 192 can be rotated so that a first end 210 of the cam 192 can be positioned out of or away from the cable channel 196. Further, a second, opposite end 212 of the cam 192 can be positioned out of the cam channel 206. In the fully closed position, shown in FIGS. 26 and 28, the cam 192 can be rotated so that the first end 210 is positioned in the cable channel 196 and the second end 212 is positioned within the cam channel 206 (e.g., as defined by the frame assembly 200 and/or the insulation housing 198).

In use, the cam configuration 190 can be placed in the fully open position and a cable 10 can be inserted into the channel 196, as shown in FIG. 25. Once the cable 10 is inserted, a user can press the second end 212 of each cam 192, either manually or via a tool (not shown), to rotate the cam 192 about the respective pivot member 208 until reaching the fully closed position. This rotation causes the first end 210 of the cam 192 and, more specifically, the teeth 194 to enter the channel 196, pierce through the primary jacket 16 and the core 14 of the heating cable 10, and allow the first end 210 of the cam 192 to make contact with the conductors 12, as shown in FIGS. 28 and 29. While the teeth 194 may make contact with the conductor 12, in some embodiments, the first end 210 can include a substantially smooth portion that contacts the conductor 12 when in the fully closed position to help ensure good electrical contact between the cam 192 and the conductor 12. In some embodiments, the cable 10 can be fully inserted into the channel 196 until it abuts an inner wall 216 of the frame assembly 200 (shown in FIGS. 27 and 28) before the cams 192 are rotated into their respective closed positions. For example, the channel 196 terminates at the inner wall 216 and the the inner wall 216 can act as a stopper to prevent the cable 10 from further translating in the channel 196 when the cams 192 are rotated, allowing the teeth 194 of the cams 192 to pierce the primary jacket 16 and the core 14 rather than pushing the cable 10 further into the channel 196.

In some embodiments, the cams 192, the frame assemblies 200, the washers 218, and/or the pivot members 208 can be made of conductive materials to form an electrical connection with the conductors 12. Furthermore, as shown in FIGS. 25 and 26, ring terminals 134 can be coupled to each frame assembly 200, such as to each base frame 202. As such, the cam configuration 190 of FIGS. 25-29 can include two ring terminals 134, though may include additional ring terminals 134 in some embodiments. Accordingly, when the cam configuration 190 is assembled within a termination plug 30 in the closed position, the ring terminals 134 can facilitate connection between the connector 38 of the plug 30 and the conductors 12 of the cable 10 via the ring terminals 134 and the frame assemblies 200, the washers 218 and/or the pivot members 208, and the cams 192.

Generally, the insulation housing 198 can house the frame assemblies 200 and maintain them in position relative to one another, supporting the frame assemblies 200 to hold the cable 10 in the closed position. In some embodiments, the insulation housing 198 can be assembled over the frame assemblies 200 before or after a cable 10 is connected to the cams 192. More specifically, according to one installation method, the insulation housing 198 is first assembled over frame assemblies 200. The cable 10 can be inserted into the channel 196, and the cams 192 can be rotated into the closed position so that the first ends 210 of the cams 192 contact the conductors 12 of the cable 10.

According to another installation method, each frame assembly 200 can be separately installed onto the cable 10, and the insulation housing 198 can be assembled over the frame assemblies 200. More specifically, a cable 10 can be positioned in the half channel 214 defined by one frame assembly 200 (e.g., the cable 10 can be moved longitudinally through the half channel 214 or moved laterally into the half channel 214). The respective cams 192 of that frame assembly 200 can then be manipulated into the closed position so that the first end 210 of each cam 192 contact a conductor 12 of the cable 10. Before or after this manipulation, the cable 10 can further be positioned in a half channel 214 of the other frame assembly 200 (e.g., the cable 10 can be moved longitudinally through the half channel 214 or moved laterally into the half channel 214). The respective cams 192 of the second frame assembly 200 can also be manipulated into the closed position so that the first ends 210 of the cams 192 contact the other conductor 12 of the cable 10. Once all cams 192 are in their closed positions, the insulation housing 198 can be assembled over the frame assemblies 200.

FIGS. 30-50 illustrate additional configurations that may be considered variations of the cam configuration 190 described above with respect to FIGS. 25-29. Accordingly, like elements may be numbered accordingly and any description herein corresponding to one cam configuration also being applicable to another cam configuration, unless otherwise indicated. According to some embodiments, in each of the cam configurations described herein, at least two points of electrical contact are made for each conductor 12 of a cable 10 when in the closed position. For example, looking back to the configuration 190 illustrated in FIG. 29, each conductor 12 is contacted on opposing sides by upper and lower cams 192. Furthermore, in each of the cam configurations described herein, frame assemblies may be coupled to a cable 10 separately or collectively before or after an insulation housing 198 is assembled over the frame assemblies, as described above.

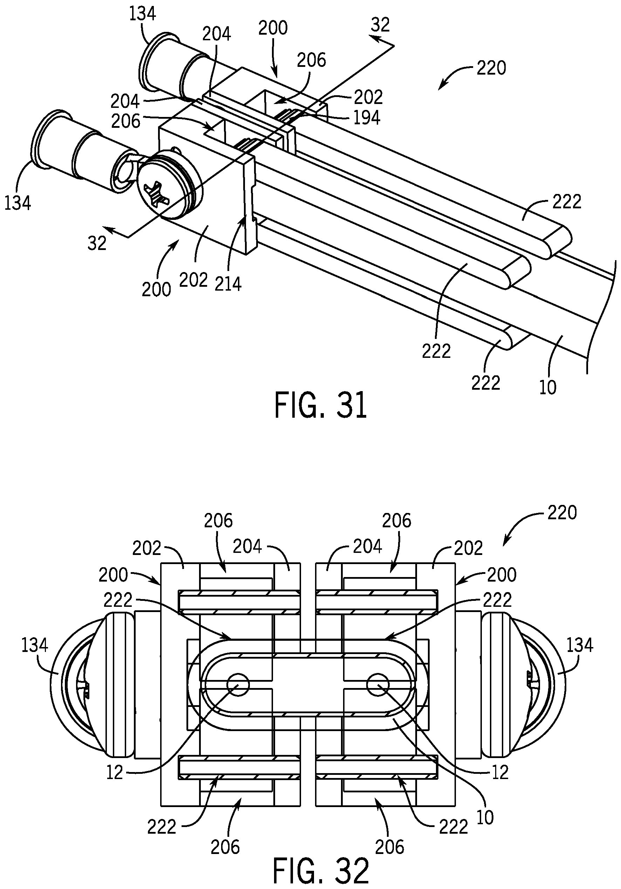

Looking now to FIGS. 30-32, a wide cam configuration 220, according to some embodiments, is illustrated. The wide cam configuration 220 may be similar to the cam configuration 190 illustrated in FIGS. 25-29, including an insulation housing 198 (shown in FIG. 30) and two frame assemblies 200 (shown in FIGS. 31 and 32), each including a base frame 202 and a frame plate 204. The insulation housing 198 can hold the frame assemblies 200 and can include openings that define a channel 196 for receiving a cable 10 and openings that define cam channels 206 to allow for rotation of cams 222. As shown in FIG. 31 (where the insulation housing 198 has been removed for clarity), each frame assembly 200 can include a respective base frame 202 coupled to a frame plate 204, e.g., with fasteners (not shown). When coupled together, each frame assembly 200 can further define the cam channels 206 to allow for rotation of an upper cam 222 and a lower cam 222, and can each define a half channel 214 which, collectively, define the channel 196 that receives the cable 10. In some embodiments, as shown in FIGS. 31 and 32, the frame assemblies 200 can be physically and/or electrically separated.

Referring to FIGS. 31 and 32, the cams 222 of the wide cam configuration 220 can be substantially wider than the cams 192 of the cam configuration 190 of FIGS. 25-29. For example, as shown in FIG. 29, each cam 192 of the cam configuration 190 may have a width about equal to a diameter of a conductor 12. However, as shown in FIG. 32, each wide cam 222 of the wide cam configuration 220 can include a width that is wider than a diameter of a conductor 12. In one embodiment, each wide cam 222 can include a width of about 0.5 inches. In other embodiments, each wide cam 222 can include a width between about 0.15 and 0.75 inches. The wide cams 222 can allow the configuration 220 to accommodate cables 10 of different widths or thicknesses, or cables 10 having conductors 12 of varying diameters, and can help maintain strong electrical connections to conductors 12 even when a cable 10 is misaligned or moved within the channel 196.

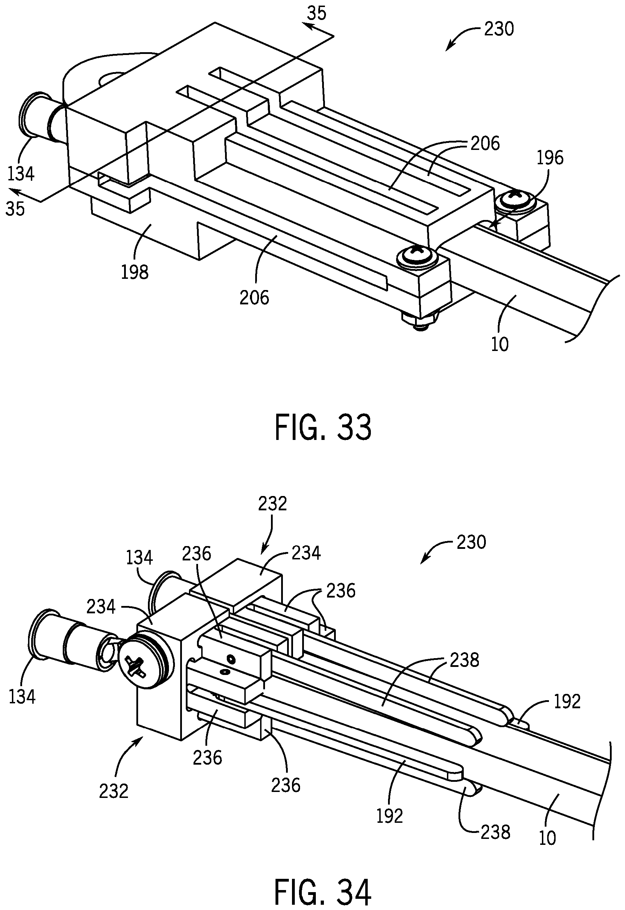

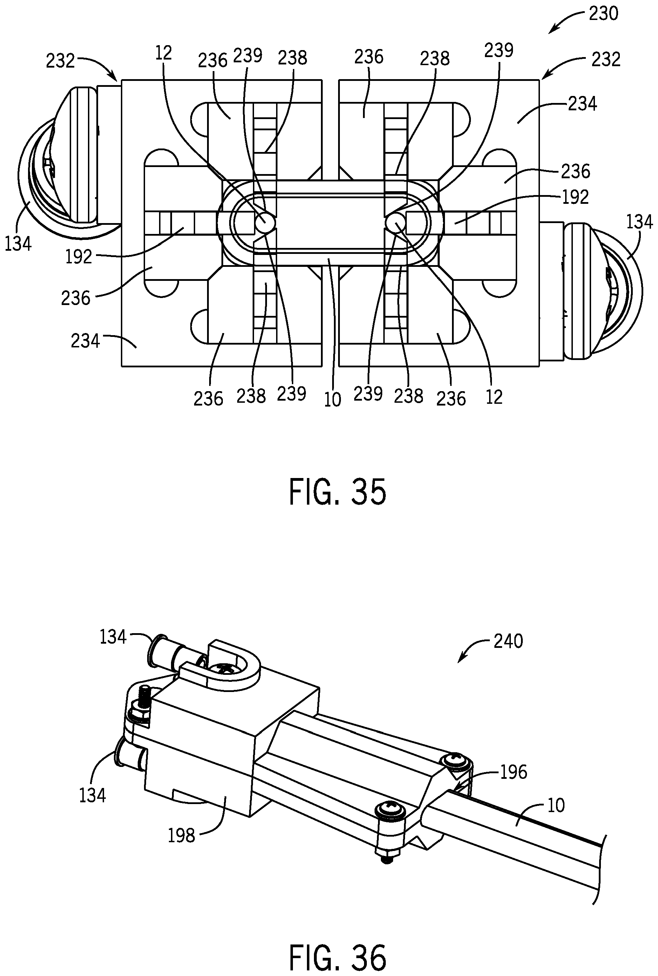

Referring now to FIGS. 33-35, a side cam configuration 230, according to some embodiments, is illustrated. The side cam configuration 230 may be similar to the cam configuration 190 illustrated in FIGS. 25-29, including an insulation housing 198 (shown in FIG. 33) and two frame assemblies 232 (shown in FIGS. 34 and 35). The insulation housing 198 can hold the frame assemblies 232 and can include openings that define a channel 196 for receiving a cable 10 and openings that define cam channels 206 to allow for rotation of cams 192, 238. As shown in FIG. 34 (where the insulation housing 198 has been removed for clarity), each frame assembly 232 can include a respective base frame 234 coupled to three cam holders 236. Each cam holder 236 can further define the cam channels 206 to allow for rotation of a respective upper cam 238, lower cam 238, and side cam 192 and the cam holders 236 of each frame assembly 232 can collectively define a half channel 214 which partially defines the channel 196 that receives the cable 10. In some embodiments, as shown in FIGS. 34 and 35, the frame assemblies 232 can be physically and/or electrically separated.

As shown in FIG. 35, the side cam configuration 230 can provide three points of contact against each conductor 12 of a cable 10 via an upper cam 238, a lower cam 238, and a side cam 192. In this configuration 230, the side cams 192 can help center the cable 10 within the channel 196, facilitating better alignment between the upper and lower cams 238 and the conductors 12. Furthermore, in some embodiments, as shown in FIG. 35, at least the upper cam 238 and the lower cam 238 can include an angled face 239 adjacent the teeth 194. These angled faces 239 can allow for better contact with the conductor 12, and may also avoid interference with other cam faces contacting the conductor 12 when in the closed position.

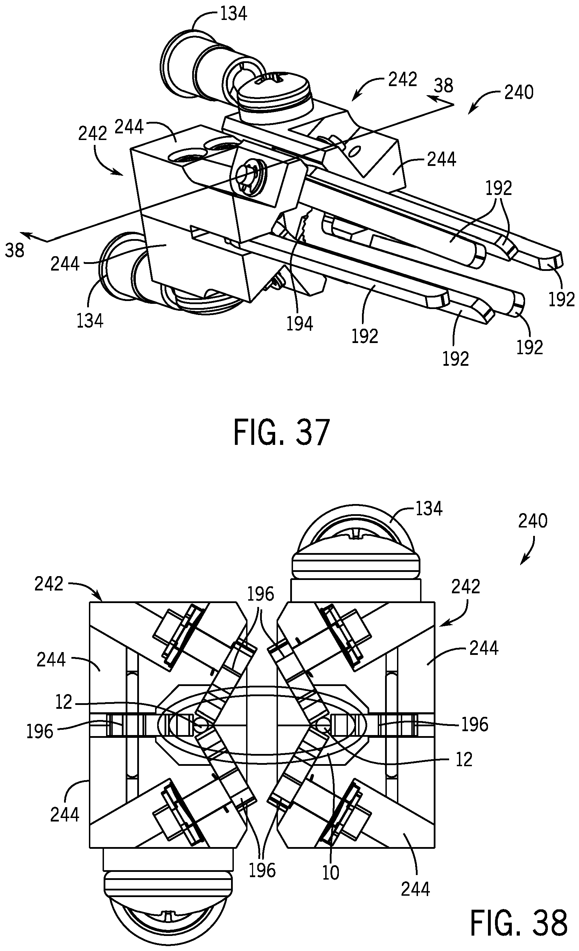

Referring now to FIGS. 36-38, an angled cam configuration 240, according to some embodiments, is illustrated. The angled cam configuration 240 may be similar to the side cam configuration 230 illustrated in FIGS. 33-35, including an insulation housing 198 (shown in FIG. 36) and two frame assemblies 242 (shown in FIGS. 37 and 38). The insulation housing 198 can hold the frame assemblies 242 and can include openings that define a channel 196 for receiving a cable 10 and openings that define cam channels 206 to allow for rotation of cams 192. As shown in FIG. 37 (where the insulation housing 198 has been removed for clarity), each frame assembly 242 can include two base frames 244 coupled together to further define the cam channels 206 to allow for rotation of respective upper cam 192, lower cam 192, and side cam 192. The base frames 244 can further collectively define a half channel 214 which partially defines the channel 196 that receives the cable 10. In some embodiments, as shown in FIGS. 37 and 38, the frame assemblies 242 can be physically and/or electrically separated.

As shown in FIG. 38, the angled cam configuration 240 can provide three points of contact against each conductor 12 of a cable 10 via an upper cam 192, a lower cam 192, and a side cam 192. In this configuration 240, the side cams 192 can help center the cable 10 within the channel 196, facilitating better alignment between the upper and lower cams 192 and the conductors 12. Furthermore, in contrast to the side cam configuration 230 shown in FIG. 35, in the angled cam configuration 240, the upper and lower cams 192 can approach a conductor 12 from an angle. More specifically, the upper and lower cams 238 of the side cam configuration 230 can be substantially parallel to one another and rotate along the same plane, whereas the upper and lower cams 192 of the angled cam configuration 230 can be non-parallel to one another and rotate along different planes.

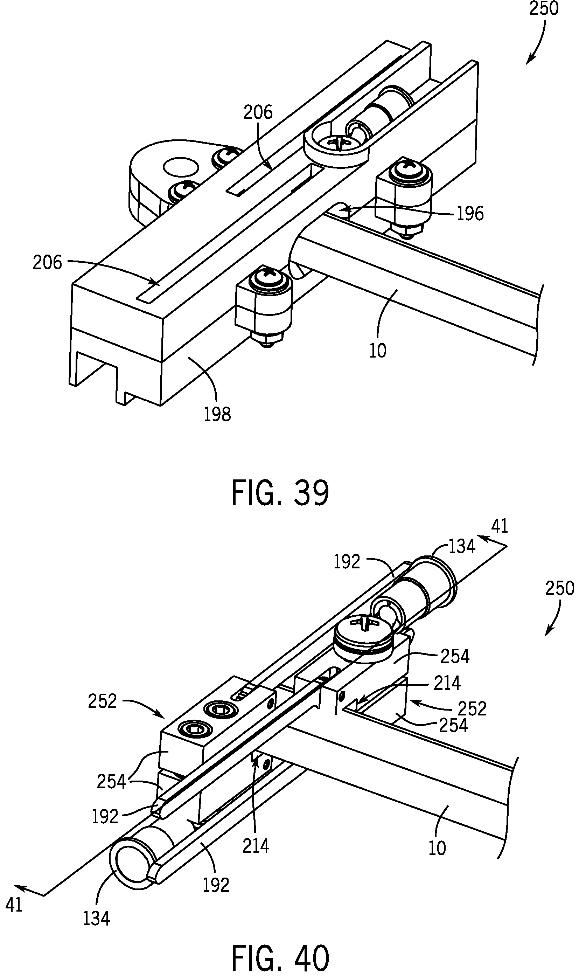

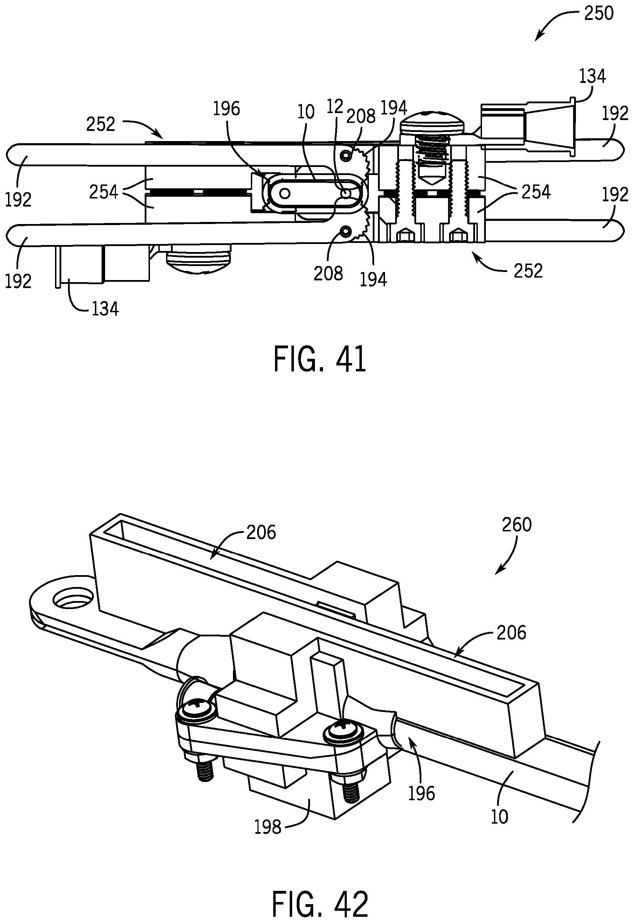

Referring now to FIGS. 39-41, a transverse cam configuration 250, according to some embodiments, is illustrated. The transverse cam configuration 250 may be similar to the cam configuration 190 illustrated in FIGS. 25-29, including an insulation housing 198 (shown in FIG. 39) and two frame assemblies 252 (shown in FIGS. 40 and 41). The insulation housing 198 can hold the frame assemblies 252 and can include openings that define a channel 196 for receiving a cable 10 and openings that define cam channels 206 to allow for rotation of cams 192. As shown in FIG. 40 (where the insulation housing 198 has been removed for clarity), each frame assembly 252 can include two base frames 254 coupled together to further define the cam channels 206 to allow for rotation of a respective upper cam 192 and lower cam 192. The base frames 244 can further collectively define a half channel 214 which further defines the channel 196 that receives the cable 10. In some embodiments, as shown in FIG. 40, the frame assemblies 252 can be physically and/or electrically separated. For example, in one embodiment, the frame assemblies 252 can be spaced apart about 0.25 inches.

As shown in FIG. 40, the transverse cam configuration 250 can provide two points of contact across each conductor 12 of a cable 10 via an upper cam 192 and a lower cam 192. In this configuration 250, the cams 192 are rotated along a plane that is perpendicular to an insertion direction of the cable 10 through the channel 196 (e.g., perpendicular to the length of the cable 10, in contrast to the previous configurations 190, 220, 230, 240 in which the cams 192 are rotated parallel to the length of the cable 10). As a result, each cam 192 can rotate across a width of the cable 10 rather than along a length of the cable 10. As a result, the first ends 210 of the cams 192 can make contact with conductors 12 of cables 10 that are wider, narrower, or misaligned within the channel 196.

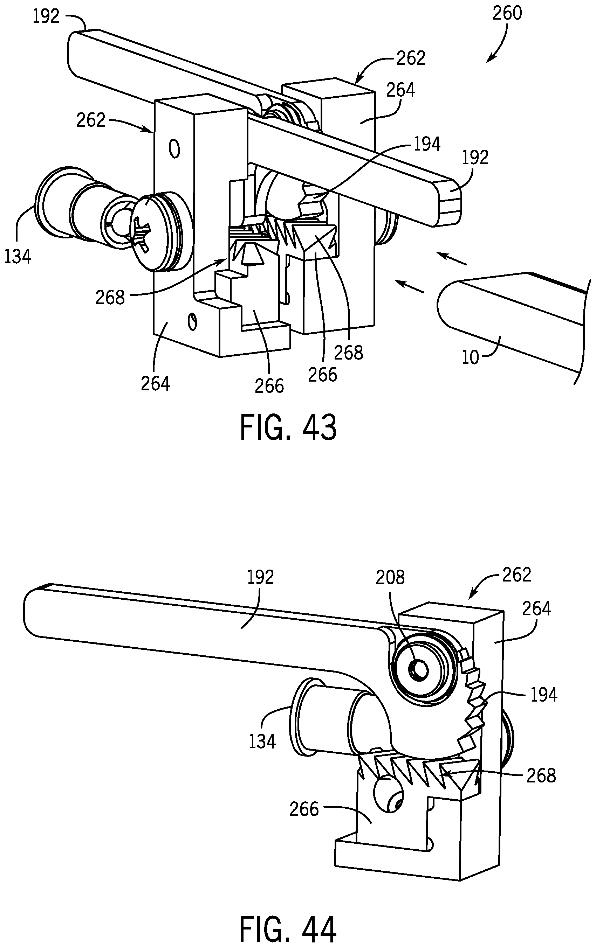

Referring now to FIGS. 42-44, a split cam configuration 260, according to some embodiments, is illustrated. The split cam configuration 260 may be similar to the cam configuration 190 illustrated in FIGS. 25-29, including an insulation housing 198 (shown in FIG. 42) and two frame assemblies 262 (shown in FIGS. 43 and 44). The insulation housing 198 can hold the frame assemblies 262 and can include openings that define a channel 196 for receiving a cable 10 and openings that define upper cam channels 206 to allow for rotation of upper cams 192. As shown in FIG. 43 (where the insulation housing 198 has been removed for clarity), each frame assembly 262 can include a base frame 264 anchored to a respective upper cam 192. The base frames 264 can further each define a half channel 214 which collectively define the channel 196 that receives the cable 10. In some embodiments, as shown in FIG. 43, the frame assemblies 262 can be physically and/or electrically separated.

As shown in FIGS. 43 and 44, the split cam configuration 260 can provide two points of contact across each conductor 12 of a cable 10 via an upper cam 192 and a lower contact member 266. In this configuration 260, the two upper cams 192 are rotated in different directions along the same plane to achieve a closed position. However, in other embodiments, this configuration 260 can include two upper cams 192 that rotate in the same direction, similar to the cam configuration 190 of FIGS. 25-29. Additionally, the lower contact member 266 can be coupled to the base frame 264 and can include an extension, such as angled saw teeth 268, that extends into the channel 196. In use, when a user rotates each upper cam 192 into the closed position, the respective upper cam 192 and, particularly, the teeth 194, can pierce through the primary jacket 16 and the core 14 of the heating cable 10, making contact with the conductor 12, and can also force the cable 10 against the lower contact member 266, where the extension (here, the angled saw teeth 268) can also pierce through the primary jacket 16 and the core 14 of the heating cable 10, making contact with the conductor 12.

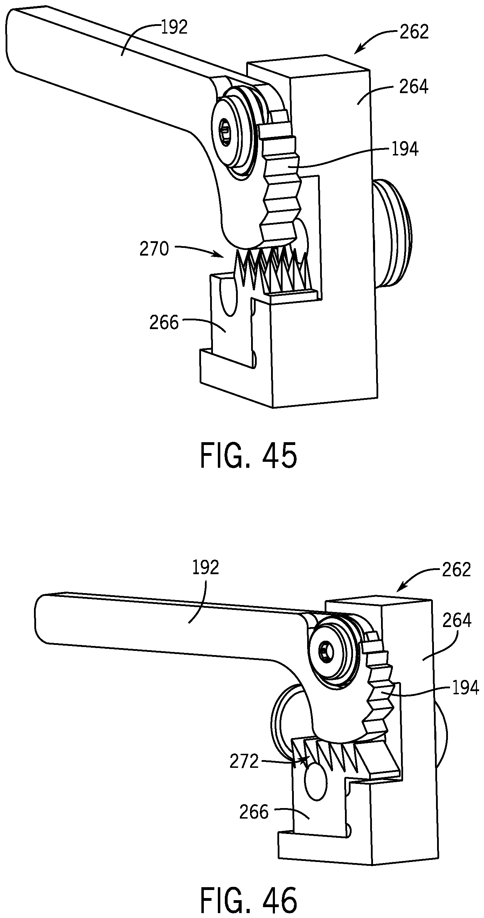

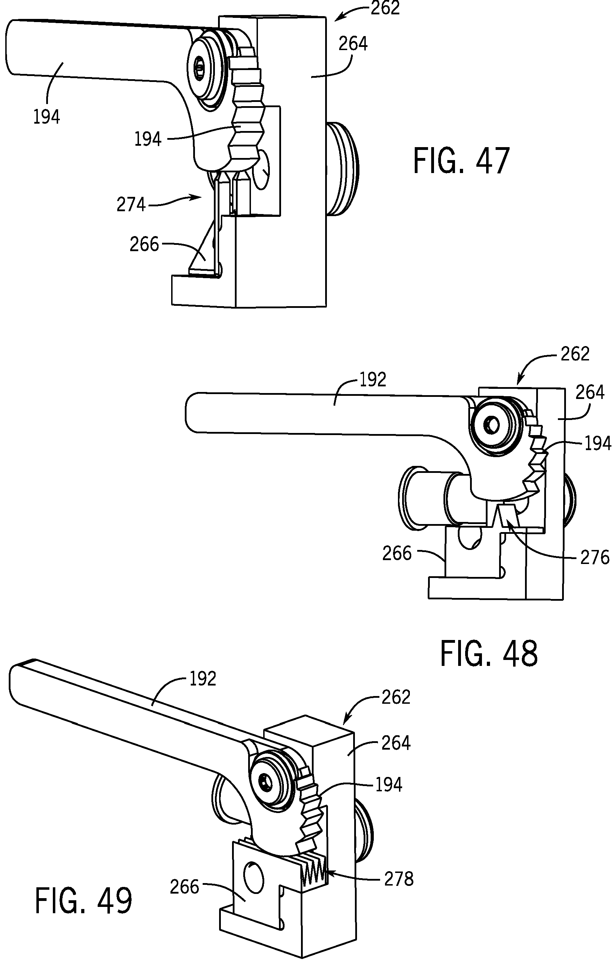

FIGS. 45-49 illustrate additional examples of lower contact members 266 according to some embodiments. For example, FIG. 45 illustrates a contact member 266 with an extension in the form of pins 270. FIG. 46 illustrates a contact member 266 with an extension in the form of lateral saw teeth 272. FIG. 47 illustrates a contact member 266 with an extension in the form of an insulation displacement connector 274 (e.g., comprising two tines). FIG. 48 illustrates a contact member 266 with an extension in the form of a single saw tooth 276. FIG. 49 illustrates a contact member 266 with an extension in the form of longitudinal saw teeth 278.

In light of the above, some embodiments provide configurations for making electrical connections with heat trace cable parallel conductors that can be incorporated into the universal end termination plug of a connection system for heating cables. Such termination assembly configurations can be connected to ends of heating cables in the field without tools or with minimal tooling, and do not require the conductors of the heating cables to be fully exposed. Rather, the termination assembly configurations can be capable of making good electrical contact with the conductors after piercing through the core material and the primary jacket of the heating cable. Due to contacting the conductors from multiple sides of the heating cable, and/or providing larger surface areas of contact against conductors, the configurations of some embodiments can provide sufficient electrical connection to conductors that can handle high current loads of heating cables, for example, compared to typical insulation displacement connection methods.

Features which are described in the context of separate embodiments may also be provided in combination in a single embodiment. Conversely, various features which are, for brevity, described in the context of a single embodiment, may also be provided separately or in any suitable sub-combination. The applicant hereby gives notice that new claims may be formulated to such features and/or combinations of such features during the prosecution of the present application or of any further application derived therefrom. Features of the termination assembly may be incorporated into/used in corresponding methods and vice versa.

It will be appreciated by those skilled in the art that while the invention has been described above in connection with particular embodiments and examples, the invention is not necessarily so limited, and that numerous other embodiments, examples, uses, modifications and departures from the embodiments, examples and uses are intended to be encompassed by the claims attached hereto. The entire disclosure of each patent and publication cited herein is incorporated by reference, as if each such patent or publication were individually incorporated by reference herein. Various features and advantages of the invention are set forth in the following claims.

## Claims

1. A termination assembly for a heating cable including a first conductor, a second conductor, a core material over the first conductor and the second conductor, and a jacket over the core material, the termination assembly comprising:
a first assembly that connects to the first conductor of the heating cable, the first assembly comprising:
a first base frame that includes a first channel that receives the heating cable,
a first cam rotatable about the first base frame to contact the first conductor from a first side when the first cam is in a closed position, and
a second cam rotatable about the first base frame to contact the first conductor from a second side when the second cam is in a closed position; and
a second assembly that connects to the second conductor of the heating cable, the second assembly comprising:
a second base frame that includes a second channel that receives the heating cable,
a third cam rotatable about the second base frame to contact the second conductor from the first side when the third cam is in a closed position, and
a fourth cam rotatable about the second base frame to contact the second conductor from the second side when the fourth cam is in a closed position,
wherein each of the first cam, the second cam, the third cam and the fourth cam includes teeth configured to pierce through the jacket and the core material when the respective cam is rotated, and a first end portion adjacent to the teeth to contact the respective conductor when the respective cam is in the closed position.

2. The termination assembly of claim 1, wherein each of the first cam, the second cam, the third cam and the fourth cam include a width that is greater than a diameter of the first conductor and the second conductor.

3. The termination assembly of claim 1, wherein the first cam is rotatable about the first base frame via a first pivot member, and wherein the first cam, the first base frame, and the first pivot member are made of electrically conductive material to form an electrical connection with the first conductor.

4. The termination assembly of claim 3, further comprising a housing that houses the first assembly and the second assembly, the housing being made of electrically insulative material.

5. The termination assembly of claim 1, wherein the first cam and the third cam rotate in the same direction from an open position to the closed position.

6. The termination assembly of claim 1, wherein the first cam and the third cam rotate in opposing directions from an open position to the closed position.

7. The termination assembly of claim 6, wherein the first cam and the third cam each rotate perpendicular to a length of the heating cable.

8. The termination assembly of claim 6, wherein the first cam and the third cam each rotate parallel to a length of the heating cable.

9. The termination assembly of claim 1, wherein:
the first assembly further comprises a fifth cam rotatable about the first base frame to contact the first conductor from a third side when the fifth cam is in a closed position; and
the second assembly further comprises a sixth cam rotatable about the second base frame to contact the second conductor from a fourth side when the sixth cam is in a closed position.

10. The termination assembly of claim 1, wherein the first end portion includes an angled face that contacts the respective conductor when the respective cam is in the closed position.

11. The termination assembly of claim 1, wherein the first channel terminates at an inner wall of the first base frame, the inner wall to prevent translational movement of the heating cable when the first cam is rotated to the closed position.

12. A method of terminating a heating cable via a termination assembly, the method comprising:
aligning a first conductor of the heating cable with a first assembly and aligning a second conductor of the heating cable with a second assembly;
rotating a first cam of the first assembly from an open position to a closed position to cause teeth of the first cam to pierce through a jacket and core material of the heating cable and allow a first end portion of the first cam adjacent to the teeth to contact the first conductor from a first side of the heating cable;
rotating a second cam of the first assembly from an open position to a closed position to cause teeth of the second cam to pierce through the jacket and the core material of the heating cable and allow a first end portion of the second cam adj acent to the teeth to contact the first conductor from a second side of the heating cable;
rotating a third cam of the second assembly from an open position to a closed position to cause teeth of the third cam to pierce through the jacket and the core material of the heating cable and allow a first end portion of the third cam adjacent to the teeth to contact the second conductor from the first side; and
rotating a fourth cam of the second assembly from an open position to a closed position to cause teeth of the fourth cam to pierce through the jacket and the core material of the heating cable and allow a first end portion of the fourth cam adj acent to the teeth to contact the second conductor from the second side.

13. The method of claim 12, further comprising:
rotating a fifth cam of the first assembly from an open position to a closed position to cause teeth of the fifth cam to pierce through the jacket and the core material of the heating cable and allow a first end portion of the fifth cam adjacent to the teeth to contact the first conductor from a third side of the heating cable; and
rotating a sixth cam of the second assembly from an open position to a closed position to cause teeth of the sixth cam to pierce through the jacket and the core material of the heating cable and allow a first end portion of the sixth cam adjacent to the teeth to contact the second conductor from a fourth side of the heating cable.

14. The method of claim 12, wherein aligning the first conductor and the second conductor comprises inserting the heating cable through a channel of the termination assembly so that the first conductor of the heating cable aligns with the first assembly and the second conductor of the heating cable aligns with the second assembly.

15. The method of claim 12, further comprising installing a housing over the first assembly and the second assembly after the first cam, the second cam, the third cam, and the fourth cam are rotated to the closed position.
